# EUROPEAN PATENT APPLICATION

(11) **EP 1 988 138 A1**
(43) Date of publication of application: **05.11.2008**
(21) Application number: 07714339.4
(22) Date of filing: 16.02.2007
(51) Int. Cl.: C09D 183/00, B32B 9/00, C09D 5/32, C09D 7/12

(54) **COATING COMPOSITION, HARDENED FILM AND RESIN LAMINATE**

(30) Priority: 24.02.2006 JP 2006047965; 03.10.2006 JP 2006271452; 24.11.2006 JP 2006316805
(71) Applicant: Idemitsu Kosan Co., Ltd., Chiyoda-ku Tokyo 100-8321 (JP)
(72) Inventor: ITO, Kazuhiko, Sodegaura-shi, Chiba 2990293 (JP); NAKAE, Mitsugu, Ichihara-shi, Chiba 2990193 (JP); SEKIGUCHI, Masahiro, Sodegaura-shi, Chiba 2990293 (JP)
(74) Representative: Gille Hrabal Struck Neidlein Prop Roos
(86) International application number: PCT/JP2007/052809
(87) International publication number: WO 2007/099784

(57) **Abstract**

A cured film including: organic ultraviolet-absorbing particles having an average particle diameter of 1 to 200 nm; and inorganic ultraviolet-absorbing particles and/or colloidal silica having an average particle diameter of 1 to 200 nm; the particles being dispersed in a matrix having an Si-O bond.

## Description

### TECHNICAL FIELD

The invention relates to a coating composition, a cured film, a transparent cured film, and a resin multilayer body which is surface-treated with the composition.

### BACKGROUND

Thermoplastics, in particular, polycarbonate resins are widely used as a structural material replacing glass due to their excellent transparency, light weight, and improved impact strength. However, application of polycarbonate resins is limited since they exhibit poor surface properties such as scratch resistance, weatherability, and chemical resistance. Therefore, there is a strong demand for improvement of the surface properties of a polycarbonate resin substrate.

As a method of improving the surface properties, a known method of coating the surface of a molded product of a polycarbonate resin with a surface treatment agent exists. For example, forming a cured layer composed of a polyfunctional acryl-based photocurable resin or a melamine- or an organopolysiloxane-based thermosetting resin on the surface of a polycarbonate resin substrate has been proposed.

Of these, a polycarbonate resin substrate coated with an organosiloxane-based resin is considered to be useful due to excellent scratch resistance and chemical resistance. However, since the organosiloxane-based resin coating has insufficient adhesion to a polycarbonate resin, peeling of the coating layer occurs when used outside for a long time. If an attempt is made to improve adhesion or abrasion resistance by increasing the film thickness of an organosiloxane-based resin, the film may suffer from such a problem that cracking readily occurs during curing. Under such circumstances, improvement has been keenly desired.

As a method of improving adhesion, Patent Document 1 proposes mixing various polymers having excellent adhesion in a coating liquid or a hard coat material. This method, however, is insufficient in scratch resistance. Use of an organic solvent such as toluene and tetrahydrofuran (THF) for dissolving a polymer makes formation of a transparent multilayer body difficult, since the surface of a polycarbonate substrate or the like is deteriorated. In some cases, weatherability of the coating liquid or the hard coat material may be deteriorated significantly. Therefore, in applications where scratch resistance and weatherability are required, it is common to use a double coating method including applying an acrylic coating liquid or an urethane coating liquid containing an UV absorber to a polycarbonate resin substrate as a primer and providing a coating layer thereon (Patent Document 2). However, the double coating method has poor productivity since the working process is long. Therefore, development of a single coating method is needed.

Patent Document 3 proposes a technique of providing a thermally-cured film on a polycarbonate resin using aqueous emulsion and colloidal silica by a single coating method. In this method, a film is formed in which silica particles are dispersed in an organic film formed by adhesion of organic particles. While it is possible to impart adhesion with a resin substrate, it is difficult to impart abrasion resistance since the surface layer is formed of organic particles.

Patent Document 4 proposes a method of providing abrasion resistance and adhesion by a single coating method. In this method, a cured film is provided on a polycarbonate resin substrate by using at least one of epoxy group-containing silane coupling agents and amino group-containing silane coupling agents as a silane coupling agent together with alkoxysilane. However, since the cured film does not contain a polymer ultraviolet absorber, weatherability is not sufficient.
Specifically, in this method, it is preferable to use at least one of an epoxy-containing silane coupling agent and an amino-containing silane coupling agent. The silane coupling agent is used in an amount of 5 to 10 parts by weight for 100 parts by weight of the nonvolatile components (JIS K5401) of the coating liquid. The document states that if the amount of the silane coupling agent is less than 5 parts by weight, film properties and adhesion may deteriorate, and if the amount of the silane coupling agent exceeds 10 parts by weight, scratch resistance may deteriorate. As described in Example 6 of Patent Document 4, a polycarbonate resin multilayer body which is not or is insufficiently provided with resistance to ultraviolet rays has poor weatherability and will suffer from peeling of the coating layer.

Patent Document 5 discloses a composition containing a silicone-containing polymer ultraviolet absorber and a polyorganosiloxane. However, it is impossible to obtain a stable dispersion by merely mixing a polymer ultraviolet absorber and a polyorganosiloxane.

Patent Document 6 discloses a transparent cured film having an inter-film structure in which polymer nanoparticles having ultraviolet-absorbing properties are highly dispersed in silica. This transparent cured film is improved in abrasion resistance, ultraviolet blocking performance and initial adhesion, but is still insufficient in respect of durability (boiling resistance).
Patent Document 1: JP-A-11-043646
Patent Document 2: JP-A-2004-131549
Patent Document 3: JP-A-2003-82272
Patent Document 4: JP-A-2000-272071
Patent Document 5: JP-A-2004-1393
Patent Document 6: WO2006/022347

In view of the above problems, an object of the invention is to provide a cured film exhibiting sufficient adhesion to a resin substrate such as a polycarbonate resin substrate without using a primer and having excellent scratch resistance and weatherability, a coating composition and a resin multilayer body.

Another object of the invention is to provide a cured film exhibiting sufficient adhesion to a resin substrate such as a polycarbonate resin substrate without using a primer and having excellent scratch resistance, weatherability and boiling resistance, which is a standard of durability, a coating composition and a resin multilayer body.

Still another obj ect of the invention is to provide a cured film exhibiting sufficient adhesion to a resin substrate such as a polycarbonate resin substrate without using a primer and having excellent scratch resistance, flexibility, ultraviolet-absorbing properties and boiling resistance, which is a standard of durability, a coating composition and a resin multilayer body.

A further object of the invention is to provide a method for producing the above-mentioned cured film, the coating composition and the resin multilayer body.

### SUMMARY OF THE INVENTION

According to the invention, the following cured film, the coating composition, the multilayer body or the like are provided.
1. A cured film comprising:
   organic ultraviolet-absorbing particles having an average particle diameter of 1 to 200 nm; and
   inorganic ultraviolet-absorbing particles and/or colloidal silica having an average particle diameter of 1 to 200 nm;
   the particles being dispersed in a matrix having an Si-O bond.
2. The cured film according to 1 wherein the volume fraction of the organic ultraviolet-absorbing particles in the cured film is 0.5 to 70 vol%.
3. The cured film according to 1 or 2 wherein the total reduced weight of an inorganic oxide contained in the cured film is 30 to 80 wt% of the total weight of the cured film.
4. A coating composition comprising the following components (1) to (7):
   (1) an alkoxysilane compound or a polyalkoxysilane compound;
   (2) an aminosilane compound;
   (3) an epoxysilane compound;
   (4) polymer ultraviolet absorber particles;
   (5) a curing catalyst;
   (6) inorganic ultraviolet-absorbing particles and/or colloidal silica; and
   (7) a solvent
5. The coating composition according to 4 wherein
   the amounts of the components (1) to (7) are in the following ranges:
   Component (1): 10 to 90 wt%
   Component (2): 1 to 55 wt%
   Component (3): 1 to 60 wt%
   Component (4): 0.1 to 65 wt%
   Component (5): 0.1 to 30 wt%
   Component (6):
      0.1 to 50 wt% if the component (6) is only the inorganic ultraviolet-absorbing particles;
      0.1 to 80 wt% if the component (6) is only the colloidal silica; and
      0.1 to 50 wt% of the inorganic ultraviolet-absorbing particles and 0.1 to 80 wt% of the colloidal silica if the component (6) is the inorganic ultraviolet-absorbing particles and the colloidal silica
   Component (7) : 10 to 1000 parts by weight for 100 parts by weight of the total amount of the components (1) to (6).
6. The coating composition according to 4 or 5 wherein the curing catalyst is an organic acid.
7. A cured film obtained by curing the coating composition according to any one of 4 to 6.
8. A resin multilayer body obtained by forming on a resin substrate the cured film according to any one of 1 to 3 and 7.
9. The multilayer body according to 8 which has a haze of 10% or less.
10. The multilayer body according to 9 which has a visible light transmittance of 80% or more.
11. A method for producing a coating composition comprising mixing the following components (1) to (7):
   (1) an alkoxysilane compound or a polyalkoxysilane compound;
   (2) an aminosilane compound;
   (3) an epoxysilane compound;
   (4) polymer ultraviolet absorber particles;
   (5) a curing catalyst;
   (6) inorganic ultraviolet-absorbing particles and/or colloidal silica; and
   (7) a solvent.
12. The method for producing a coating composition according to 11 wherein
   a mixed solution containing at least the components (1) and (6) is prepared; and
   the component (4) is finally mixed.
13. The method for producing a cured film comprising curing the coating composition according to any one of 4 to 6 by heating.
14. A cured film comprising organic particles containing an ultraviolet-absorbing group and having an average particle size of 1 to 200 nm, the particles being dispersed in a matrix having an Si-O bond,
   the film having a visible light transmittance of 80% or more, a haze value of 10% or less and boiling resistance.
15. The cured film according to 14 wherein the volume fraction of the organic particles in the cured film is 0.5 to 70 vol%.
16. The cured film according to 14 or 15 wherein the SiO₂-reduced weight of Si-derived components contained in the cured film is 30 to 80 wt% of the total weight of the cured film.
17. A coating composition comprising the following components (1') to (7'):
   (1') an organoalkoxysilane compound or a polyorganoalkoxysilane compound;
   (2') an aminosilane compound;
   (3') an epoxysilane compound;
   (4') a blocked isocyanatosilane compound
   (5') a polymer ultraviolet absorber;
   (6') a curing catalyst; and
   (7') a solvent.
18. A coating composition according to 17 wherein the amounts of the components (1') to (7') are in the following ranges:
   the organoalkoxysilane compound or the polyorganocarboxysilane compound (1'): 10 to 80 wt%;
   the aminosilane compound (2'): 1 to 60 wt%;
   the epoxysilane compound (3'): 1 to 60 wt%;
   the blocked isocyanatosilane compound (4'): 1 to 60 wt%;
   the polymer ultraviolet absorber (5'): 0.1 to 50 wt%;
   the curing catalyst (6'): 0.1 to 40 wt%; and
   the solvent (7'): 5 to 1000 parts by weight for 100 parts by weight of the total amount of the components (1') to (6').
19. The coating composition according to 17 or 18 wherein the blocking agent of the blocked isocyanatosilane compound is oxime compound, lactam, alkylphenol, dialkylphenol, trialkylphenol, malonic acid diester, acetylacetone, active methylene compound, alcohol, hydroxyl group-containing ether, hydroxyl group-containing ester, mercaptan, acid amide, imidazole, pyrazol, triazole or acid imide.
20. The coating composition according to any one of 17 to 19 wherein the isocyanate compound of the blocked isocyanate compound is a γ-isocyanatopropyltrimethoxysilane, γ-isocyanatopropyltriethoxysilane or an isocyanatosilane compound.
21. The coating composition according to 17 or 18 wherein the cured catalyst is an organic acid.
22. A cured film obtained by curing the coating composition according to any one of 17 to 21.
23. A resin multilayer body obtained by forming on a resin substrate the cured film according to any one of 14 to 16 and 22.
24. A method for producing a coating composition comprising mixing the following components (1') to (7'):
   (1') an organoalkoxysilane compound or a polyorganoalkoxysilane compound;
   (2') an aminosilane compound;
   (3') an epoxysilane compound;
   (4') a blocked isocyanatosilane compound;
   (5') a polymer ultraviolet absorber;
   (6') a curing catalyst; and
   (7') a solvent.
25. The method for producing a coating composition according to 24 wherein
   a first mixed solution containing at least the components (1') and (4') is prepared; and
   the component (2') is finally mixed.
26. A method for producing a cured film comprising curing the coating composition according to any one of 17 to 21 by heating.
27. A cured film comprising
   organic particles having an ultraviolet-absorbing group and an average particle diameter of 1 to 200 nm and
   inorganic ultraviolet-absorbing particles and/or colloidal silica having an average diameter of 1 to 200 nm,
   the particles being dispersed in a matrix having an Si-O bond,
   the film having a visible light transmittance of 80% or more, a haze value of 10% or less and boiling resistance.
28. The cured film according to 27 wherein the volume fraction of the organic particles in the cured film is 0.5 to 70 vol%.
29. The cured film according to 27 or 28 wherein the oxide-reduced weight of inorganic components contained in the cured film is 30 to 80 wt% of the total weight of the cured film.
30. A coating composition comprising the following components (1") to (8"):
   (1") an organoalkoxysilane compound or a polyorganoalkoxysilane compound;
   (2") an aminosilane compound;
   (3") an epoxysilane compound;
   (4") a blocked isocyanatosilane compound
   (5") a polymer ultraviolet absorber;
   (6") inorganic ultraviolet-absorbing particles and/or colloidal silica;
   (7") a curing catalyst; and
   (8") a solvent.
31. A coating composition according to 30 wherein the amounts of the components (1") to (8") are in the following ranges:
   the organoalkoxysilane compound or the polyorganoalkoxysilane compound (1"): 10 to 80 wt%;
   the aminosilane compound (2"): 1 to 60 wt%;
   the epoxysilane compound (3"): 1 to 60 wt%;
   the blocked isocynatosilance compound (4"): 1 to 60 wt%;
   the polymer ultraviolet absorber (5"): 0.1 to 50 wt%;
   the inorganic ultraviolet-absorbing particles and/or colloidal silica (6")
      0.1 to 50 wt% if the component (6") is only the inorganic ultraviolet-absorbing particles;
      0.1 to 80 wt% if the component (6") is only the colloidal silica; and
      0.1 to 50 wt% of the inorganic ultraviolet-absorbing particles and 0.1 to 80 wt% of the colloidal silica if the component (6") is the inorganic ultraviolet-absorbing particles and the colloidal silica
   the curing catalyst (7"): 0.1 to 40 wt%; and
   the solvent (8") : 5 to 1000 parts by weight for 100 parts by weight of the total amount of the components (1") to (7").
32. The coating composition according to 30 or 31 wherein the curing catalyst is an organic acid.
33. A cured film obtained by curing the coating composition according to any one of 30 to 32.
34. A multilayer body obtained by forming on a resin substrate a cured film according to any one of 27 to 29.
35. A method for producing a coating composition comprising mixing the following components (1") to (8"):
   (1") an organoalkoxysilane compound or a polyorganoalkoxysilane compound;
   (2") an aminosilane compound;
   (3") an epoxysilane compound;
   (4") a blocked isocyanatosilane compound;
   (5") a polymer ultraviolet absorber;
   (6") inorganic ultraviolet-absorbing particles and/or colloidal silica;
   (7") a curing catalyst; and
   (8") a solvent.
36. The method for producing a coating composition according to 35 wherein
   a first mixed solution containing at least the components (1") and (4") is prepared, then;
   the component (2") is mixed; and
   the component (6") is finally mixed.
37. A method for producing a cured film comprising curing the coating composition according to any one of 30 to 32 by heating.

### BRIEF DESCRIPTION OF DRAWINGS

FIG. 1 is a photograph showing the cross-section of a cured film prepared in Example 1;
FIG. 2 is a photograph showing the cross-section of a cured film prepared in Example 12; and
FIG. 3 is an enlarged photograph showing the cross-section of a cured film prepared in Example 23.

### BEST MODE FOR CARRYING OUT THE INVENTION

A first aspect of the invention will be described below.
A transparent cured film according to the first aspect of the invention (hereinafter occasionally referred to as a first cured film) comprises organic ultraviolet-absorbing particles having an average particle diameter of 1 to 200 nm and inorganic ultraviolet-absorbing particles having an average particle diameter of 1 to 200 nm and/or colloidal silica having an average particle diameter of 1 to 200 nm. These particles are dispersed in a matrix having an Si-O bond. A cured film with excellent resistance to ultraviolet rays and having a high degree of transparency can be obtained by finely dispersing in a film organic ultraviolet-absorbing particles and inorganic ultraviolet-absorbing particles and/or colloidal silica.

A polymer ultraviolet absorber can preferably be used as the organic ultraviolet-absorbing particles. The polymer ultraviolet absorber, the inorganic ultraviolet-absorbing particles and the colloidal silica will be described later.
The average particle diameter of the organic ultraviolet-absorbing particles, the inorganic ultraviolet-absorbing particles and the colloidal silica is defined as the mean value obtained by observing the cross-section of the thermally-cured film formed on a resin substrate using a transmission electron microscope (TEM), and processing the TEM image using image processing software. From the viewpoint of transparency, the average particle size of these particles is preferably 100 nm or less.

Examples of a matrix having an Si-O bond include an Si-O condensation product which is formed by a hydrolysis/condensation reaction of an alkoxysilane compound. An organic substituent such as an Me (methyl) group may be covalently bonded or an OMe group or an OH group, which remain uncondensed, may be covalently bonded to Si.

The volume fraction of the organic ultraviolet-absorbing particles in the first cured film is preferably 0.5 to 70 vol%, particularly preferably 1 to 50 vol%. Due to such a volume fraction, the cured film is highly transparent and is improved in ultraviolet-absorbing properties.
The volume fraction of the organic ultraviolet-absorbing particles is defined as the value obtained by observing the cross-section of the cured film formed on a resin substrate using a transmission electron microscope (TEM), processing the TEM image using image processing software to obtain the area percentage thereof, and dividing the area percentage by the value of "thickness of the observed sample/average particle diameter".

In the first cured film of the invention, the total-reduced weight of an inorganic oxide derived from the Si compound, the inorganic ultraviolet-absorbing particles, the colloidal silica or the like contained in the cured film is preferably 30 to 80 wt%, and particularly preferably 40 to 80 wt% of the total weight of the cured film. The above range allows a cured film with excellent film-forming properties (no cracking) and scratch resistance to be obtained.
The ratio of the inorganic oxide is determined by subjecting a cured film sample to a thermogravimetric measurement on a petri dish made of Teflon (registered trademark) (under nitrogen, the temperature is raised at 20 °C/min in a range from room temperature to 800°C) and calculating from the amount of a residue at 800°C.

The first cured film of the invention can be applied to a variety of resin substrates to form a resin multilayer body. In particular, the cured film of the invention may suitably be applied to polycarbonate resins and polymethyl methacrylate (PMMA).
The polycarbonate resin substrate is not particularly limited. A polymer is used which is obtained by a known method from a bisphenol compound represented by 2,2-bis(4-hydroxyphenyl)alkane and 2,2-bis(4-hydroxy-3,5-dihalogenophenyl)alkane. The skeleton of the polymer may contain a structural unit derived from a fatty acid diol or a structural unit having an ester bond. The molecular weight of the polymer is not particularly limited. In respect of extrusion moldability or mechanical strength, it is preferred that the viscosity-average molecular weight of the polymer be 10,000 to 50,000, and more preferably 13,000 to 40,000. The thickness of the substrate is not particularly limited, but preferably about 0.1 to 20 mm. It is preferred that the polycarbonate resin substrate be a transparent substrate.

If necessary, the resin substrate may appropriately contain additives such as an ultraviolet absorber, an antioxidant, a heat stabilizer, a flame retardant, an inorganic filler, an antistatic agent, and a heat ray blocking agent.

In the case of a polycarbonate resin multilayer body, it is preferable to use a polycarbonate resin substrate, on which a polycarbonate resin layer with a thickness of 5 to 100 µm, which contains preferably 1 to 10 parts by weight and more preferably 1 to 5 parts by weight of an ultraviolet absorber for 100 parts by weight of the polycarbonate resin, is provided on the surface thereof, in order to further improve weatherability. As the ultraviolet absorber, known ultraviolet absorbers such as benzotriazole-based absorbers, benzophenone-based absorbers, phenyl salicylate-based absorbers, and triazine-based absorbers can be given. Generally, the triazole-based absorbers are used.

There are no restrictions on the method of providing the polycarbonate resin layer containing an ultraviolet absorber on the polycarbonate resin substrate. It is preferred that the polycarbonate resin layer be provided by a co-extrusion method in which a polycarbonate resin and a polycarbonate resin containing an ultraviolet absorber are simultaneously melt-extruded to form a sheet.

The resin multilayer body in the first aspect of the invention (hereinafter often referred to as the first resin multilayer body) has a double layer structure of a resin substrate and a coating layer. As long as the effects of the invention are not impaired, another layer may be appropriately provided on the coating layer by a known method. For example, it is possible to provide the layer by physical deposition methods including vacuum vapor deposition, sputtering and ion plating, chemical deposition method such as a thermal CVD method, a plasma CVD method and an optical CVD method, thermal spraying methods such as an atmospheric plasma spraying method and a low-pressure plasma spraying method. It is also possible to provide an SiO₂ film (a film having an SiO₂ structure similar to glass) by application of polysilazane or the like, a multilayer film containing, in an appropriate combination, oxides of Si, Al, Zr, Y, Ti, Ta or the like which can impart reflection prevention performance, or a film of an oxide of In, Sn or the like which can impart conductivity.

The first resin multilayer body of the invention preferably has a visible light transmittance of 80% or more, more preferably 85% or more. The haze value is preferably 10% or less, more preferably 5% or less.

The first cured film of the invention can be prepared by curing the coating composition according to the first aspect of the invention which will be described later (hereinafter occasionally referred to as a first coating composition).

The first coating composition of the invention comprising the following components (1) to (7). Preferably, the first coating composition of the invention consists essentially of the following components (1) to (7), and more preferably the first coating composition of the invention consists of the following components (1) to (7).
(1) an alkoxysilane compound or a polyalkoxysilane compound;
(2) an aminosilane compound;
(3) an epoxysilane compound;
(4) polymer ultraviolet absorber particles;
(5) a curing catalyst;
(6) inorganic ultraviolet-absorbing particles and/or colloidal silica; and
(7) a solvent

The alkoxysilane compound (1) is an alkoxysilane compound which does not contain an amino group and an epoxy group. It is preferable to use a bifunctional alkoxysilane, a trifunctional alkoxysilane, or a tetrafunctional alkoxysilane. It is more preferable to use a trifunctional alkoxysilane or a tetrafunctional alkoxysilane. These alkoxysilane compounds may be used either singly or in combination of two or more.
Examples of the trifunctional alkoxysilane include methyltrimethoxysilane, methyltriethoxysilane, ethyltrimethoxysilane, ethyltriethoxysilane, hexytrimethoxysilane, phenyltrimethoxysilane, phenyltriethoxysilane, vinyltrimethoxysilane, vinyltriethoxysilane, γ-methacryloxypropyltrimethoxysilane, 3-isocyanatopropyltrimethoxysilane, blocked isocyanatotrimethoxysilane in which the isocyanate group is blocked with 2-butanoneoxime, ureidopropyltriethoxysilane, trifluoropropyltrimethoxysilane and trifluoropropyltriethoxysilane.
As examples of the tetrafunctinal alkoxysilane, tetramethoxysilane, tetraethoxysilane, tetra-n-propoxysilane, tetraisopropoxysilane, tetra-n-butoxysilane, tetraisobutoxysilane, and the like can be given.

A preferred alkoxysilane compound (1) may be expressed by the following formula (1).

(R¹)ₘSi(OR²)₄₋ₘ (1)

wherein R¹, which may be the same or different, is independently an alkyl group having 1 to 6 carbon atoms, a vinyl group, a phenyl group, or an alkyl group having 1 to 6 carbon atoms substituted by a methacryloxy group, isocyanate group, ureide group, or fluoro group, R² is an alkyl group having 1 to 4 carbon atoms, and m is an integer of 0, 1 or 2.

The polyalkoxysilane compound (1) is a compound in which the above-mentioned alkoxysilane compounds are bonded through a siloxane bond (Si-O bond). As specific examples of the polyalkoxysilane compound (1), polyalkoxysilane compounds (alkoxysilicate compounds) such as "Silicate 40", "Silicate 45", "Silicate 48", "M Silicate 51", and "MTMS-A" (manufactured by Tama Chemicals Co., Ltd.) can be given.

The aminosilane compound (amino group-containing silane compound) (2) is an alkoxysilane compound which contains an amino group but does not contain an epoxy group. Specific examples include:
N-(2-aminoethyl)-3-aminopropylmethyldimethoxysilane,
N-(2-aminoethyl)-3-aminopropyltrimethoxysilane,
N-(2-aminoethyl)-3-aminopropyltriethoxysilane,
3-aminopropyltriethoxysilane, 3-aminopropyltrimethoxysilane, and N-methylaminopropyltrimethoxysilane.

A preferred aminosilane compound (2) may be expressed by the following formula (2).

(R¹¹)ₙSi(OR²)₄₋ₙ (2)

wherein R¹¹, which may be the same or different, is independently an alkyl group having 1 to 4 carbon atoms, a vinyl group, a phenyl group, or an alkyl group having 1 to 3 carbon atoms which is substituted by one or more groups selected from the group consisting of a methacryloxy group and an amino group, provided that at least one of the R¹¹s is an alkyl group having 1 to 3 carbon atoms which is substituted by an amino group, R² is an alkyl group having 1 to 4 carbon atoms, and n is an integer of 1 or 2.

The epoxysilane compound (epoxy group-containing compound) (3) is an alkoxysilane compound which contains an epoxy group but does not contain an amino group. Specific examples of the epoxysilane compound (3) include 3-glycydoxypropylmethyldiethoxysilane, 3-glycydoxypropyltrimethoxysilane, 2-(3,4-epoxycyclohexyl)ethyltrimethoxysilane, 3-glycydoxypropyltriethoxysilane and dimethoxyglycydoxypropylmethylsilane(3-glycydoxypropylmethy ldimethoxysilane).

A preferred epoxysilane compound (3) may be expressed by the following formula (3).

(R²¹)ₙSi(OR²)₄₋ₙ (3)

wherein R²¹, which may be the same or different, is independently an alkyl group having 1 to 4 carbon atoms, a vinyl group, a phenyl group, or an alkyl group having 1 to 3 carbon atoms which is substituted by one or more groups selected from the group consisting of a methacryloxy group, a glycydoxy group, and a 3,4-epoxycyclohexyl group, provided that at least one of the R²¹s is an alkyl group having 1 to 3 carbon atoms which is substituted by a glycydoxy group or a 3, 4-epoxycyclohexyl group, R² is an alkyl group having 1 to 4 carbon atoms, and n is an integer of 1 or 2.

The polymer ultraviolet absorber particles (4) are a polymer compound having a skeleton serving as an ultraviolet absorber in its molecule.
Examples thereof include a copolymer of an acrylic monomer having a skeleton serving as an ultraviolet absorber (e.g. benzophenone, benzotriazole, or triazine skeleton) as a side chain with another ethylenically unsaturated compound (e. g. acrylic acid, methacrylic acid, derivatives thereof, styrene, or vinyl acetate). In contrast to related-art ultraviolet absorbers which generally have a low molecular weight of 200 to 700, the polymer ultraviolet absorber particles normally have a weight average molecular weight exceeding 10,000. The polymer ultraviolet absorber is free from problems accompanying related-art low-molecular-weight ultraviolet absorbers, such as poor compatibility with plastics and low heat resistance, and enables a cured film to exhibit weatherability for a long time. The ultraviolet absorber may be in the form of powder, a solution prepared by dissolving the absorber in an organic solvent such as ethyl acetate as a dispersant, an emulsion prepared by dispersing the absorber in water, or the like. Specific examples include polymer ultraviolet absorber for coating manufactured by Ipposha Oil Industries Co., Ltd, such as ULS-700, ULS-1700, ULS-383MA, ULS-1383MA, ULS-383MG, ULS-385MG, ULS-1383MG, ULS-1385MG, ULS-635MH, ULS-933LP, ULS-935LH, ULS-1935LH, HC-935UE, XL-504, XL-524, XL-547, XL-729 and XL-730; and polymer ultraviolet absorbing resin coatings manufactured by Nikko-Kaken Co., Ltd, such as NCI-905-20EM and NCI-905-20EMA (a polymer ultraviolet absorber composed of a copolymer of a styrene monomer and a benzotriazole-based monomer). Preferable examples include those obtained by using, as a dispersion medium, water, low alcohols such as methanol, ethanol and propanol and cellosolves such as methyl cellosolve and methoxy propanol. By using such a dispersion medium, dispersibility of a polymer ultraviolet absorber is improved, whereby sedimentation can be prevented. More preferable polymer ultraviolet absorbers include those which obtained by using water as the dispersion medium. Use of water as a dispersion medium is advantageous since it can also be used as hydrolysis and condensation of a silane compound which is necessary for forming a matrix having an Si-O bond.

The curing catalyst (5) is a catalyst which hydrolyzes and condenses (cures) the silane compounds (1), (2) and (3). Examples of the curing catalyst (5) include inorganic acids such as hydrochloric acid, sulfuric acid, nitric acid, phosphoric acid, nitrous acid, perchloric acid, and sulfamic acid, and organic acids such as formic acid, acetic acid, propionic acid, butyric acid, oxalic acid, tartaric acid, succinic acid, maleic acid, glutamic acid, lactic acid, p-toluenesulfonic acid and citric acid.
Also, organic metal salts such as lithium hydroxide, sodium hydroxide, potassium hydroxide, n-hexylamine, dimethylamine, tributylamine, diazabicycloundecene, ethanolamine acetate, dimethylaniline formate, tetraethylammonium benzoate, sodium acetate, potassium acetate, sodium propionate, potassium propionate, sodium formate, potassium formate, benzoyltrimethylammonium acetate, tetramethylammonium acetate, and tin octylate, and Lewis acids such as tetraisopropyl titanate, tetrabutyl titanate, aluminum triisobutoxide, aluminum triisopropoxide, aluminum acetylacetonate, SnCl₄, TiCl₄ and ZnCl₄ can be given as the curing catalyst.

Of these curing catalysts (5), organic acids are preferably used since a high degree of dispersion can be attained and transparency of the resulting film can be improved even though the amount of a polymer ultraviolet absorber particles (4) is increased. In particular, organic carboxylic acids are preferable. Especially, acetic acid is preferable.
The curing catalysts may be used either singly or in combination of two or more.

As examples of the inorganic ultraviolet absorber particles (6), semiconductors can be given. A semiconductor absorbs light which has energy larger than the band gap, i.e. ultraviolet rays, and electrons are generated in a conductor band and holes are generated in a valence band. It seems that energy is released by a process in which electrons and holes are recombined and converted into energy such as heat. Known inorganic ultraviolet-absorbing particles include titanium oxide, zinc oxide, cerium oxide, iron oxide, zirconium oxide, tungsten trioxide and strontium titanium. For example, a rutile type titanium oxide has a band gap energy of 3 eV and an anatase type titanium oxide has a band gap energy of 3.2 eV, corresponding to optical energies having a wavelength of about 410 nm and about 390 nm, respectively. They can absorb light of which the wavelength is shorter than those mentioned above, i.e. ultraviolet rays. Since ultraviolet rays having a longer wavelength can be blocked, rutile type titanium oxide is used in many cases. Rutile type titanium oxide does not substantially absorb light having a wavelength longer than the ultraviolet rays, i.e. visible rays.

Commercially available inorganic ultraviolet absorber particles can be used according to applications and manufacturing methods. Specific examples of titanium oxide include "Neutral Titania Sol TSK-5 ", manufactured by Ishihara Sangyo Kaisha, Ltd. Specific examples of cerium oxide include "Needral", which is a cerium oxide-based ultraviolet absorber manufactured by Taki Chemical Co., Ltd. , "Needral P-10", which is a water-dispersion type anionic emulsion manufactured by Taki Chemical Co., Ltd., "Needral U-15", which is a water-dispersion type cationic emulsion manufactured by Taki Chemical Co., Ltd., and powder type. Specific examples of zinc oxide include "ZS-303", manufactured by Sumitomo Osaka Cement Company, and "Ultrafine Particle Zinc Oxide FZO", manufactured by Ishihara Sangyo Kaisha, Ltd. Inorganic ultraviolet-absorbing particles release ultraviolet energy after converting it into weak energy by the action of the electrons thereof. At this time, inorganic ultraviolet-absorbing particles themselves do not undergo physical changes, and therefore, the particles retain the properties for a prolonged period of time.

The colloidal silica (6) is also referred to as colloid silica and colloid silicate. It means a colloidal suspension of silicate oxide having an Si₋OH group on its surface by hydration in water. The colloidal silica is generated when hydrochloric acid is added to an aqueous solution of sodium silicate. Recently, various new methods for forming colloidal silica have been developed. Examples of the colloidal silica include colloidal silica dispersed in a non-aqueous solution or fine powder colloidal silica obtained by the vapor method. The particle size thereof is varied, ranging from several nanometers to several microns. The colloidal silica used in the first aspect of the invention has an average particle diameter of 1 to 200 nm. The composition of some cillidal silicas is not known. Some colloidal silicas are polymers with a siloxane bond (-Si-O-, -Si-O-Si-). The surface thereof is porous, and is usually negatively charged in water.

Commercially available colloidal silica include "high purity colloidal silica" Quartron PL series (product name: PL-1, PL-3, and PL-7), manufactured by FUSO Chemical Co., Ltd., "High-purity Organosol", manufactured by FUSO Chemical Co., Ltd., "Aqueous silica sol" (product name: Snowtex 20, Snowtex 30, Snowtex 40, Snowtex O, Snowtex O-40, Snowtex C, Snowtex N, Snowtex S, Snowtex 20L, and Snowtex OL), manufactured by Nissan Chemical Industries, Ltd., and Organosilica sol (product name: methanol silica sol, MA-ST-MS, IPA-ST, IPA-ST-MS, IPA-ST-L, IPA-SY-ZL, IPA-ST-UP, EG-ST, NPC-ST-30, MEK-ST, MEK-ST-MS, MIBK-ST, XBA-ST, XBA-ST, PMA-ST, and DMAC-ST).

Only the polymer ultraviolet absorber particles impart excellent ultraviolet resistance. If further improvement of durability is required, the amount of the polymer ultraviolet absorber particles in the cured film may be increased. However, by this method, it is expected that scratch resistance significantly lowers. It is possible to produce a cured film by using only inorganic ultraviolet-absorbing particles and/or colloidal silica. However, in such a case, flexibility of the cured film is lowered and prevention of occurrence of cracking during thermal curing becomes difficult. Accordingly, it is difficult to increase the thickness of the cured film. As a result, sufficient ultraviolet-absorbing properties cannot be exhibited. In the first aspect of the invention, by using an organic ultraviolet absorber, and an inorganic ultraviolet absorber and/or colloidal silica in combination, improved ultraviolet-absorbing properties can be obtained without impairing other properties.

The first coating composition of the invention is used in the state that it is mixed in water/an organic solvent. The solvent (7) used in the first aspect of the invention is not particularly limited insofar as the solvent allows mixing the above components uniformly. Examples of the solvent include water, alcohols, aromatic hydrocarbons, ethers, ketones and esters. Of these organic solvents, specific examples of the alcohol include methanol, ethanol, n-propyl alcohol, i-propyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol monobutyl ether, ethylene glycol monoethyl ether acetate, diethylene glycol monoethyl ether, propylene glycol monomethyl ether (1-methoxy-2-propanol), propylene monomethyl ether acetate, diacetone alcohol, methylcellosolve, ethylcellosolve, propylcellosolve, and butylcellosolve.
Specific examples of other solvents include cyclohexanone, acetone, methyl ethyl ketone, methyl isobutyl ketone, tetrahydrofuran, 1,4-dioxane, 1,2-dimethoxyethane, xylene, dichloroethane, toluene, methyl acetate, ethyl acetate, and ethoxyethyl acetate.
These solvents may be used either singly or in combination of two or more.

The amounts of the components (1) to (7) may be determined appropriately. For example, the components (1) to (7) are used in amounts as follows.
An alkoxysilane compound (1): preferably 5 to 90 wt%, more preferably 10 to 90 wt%, and still more preferably 15 to 75 wt% (tetrafunctional alkoxysilane: 5 to 50 wt%, more preferably, 5 to 45 wt%, trifunctional alkoxysilane: 5 to 80 wt%, more preferably 5 to 40 wt%)
An aminosilane compound (2): preferably 1 to 55 wt%, more preferably 2 to 45 wt%
An epoxysilane compound (3) : preferably 1 to 60 wt%, more preferably 5 to 45 wt%
Polymer ultraviolet absorber particles (4): preferably 0.1 to 65 wt%, more preferably 0.1 to 50 wt%
A curing catalyst (5): preferably 0.1 to 30 wt%, more preferably 0.1 to 20 wt%
Component (6): preferably 0.1 to 50 wt%, more preferably 0.1 to 30 wt%, if it is only the inorganic ultraviolet-absorbing particles
Component (6): preferably 0.1 to 80 wt%, more preferably 0.1 to 50 wt%, if it is only the colloidal silica
Component (6): preferably 0.1 to 50 wt%, more preferably 0.1 to 30 wt% of inorganic ultraviolet-absorbing particles, and preferably 0.1 to 80 wt%, more preferably 0.1 to 50 wt% of colloidal silica, if it is the inorganic ultraviolet-absorbing particles and the colloidal silica
The amount of each of the above-mentioned (1) to (6) is weight percentage relative to the total amount of the components (1) to (6).

When the tetrafunctional alkoxysilane is mixed in an amount exceeding 50 wt%, film-forming properties may be lowered, and cracking may occur. When the amount of the tetrafunctional alkoxysilane is less than 5 wt%, scratch resistance may deteriorate. When the trifunctional alkoxysilane is mixed in an amount exceeding 80 wt%, scratch resistance may be lowered. When the amount of the trifunctional alkoxysilane is less than 5 wt%, stability of the coating liquid may deteriorate.

When the aminosilane compound (2) is mixed in an amount exceeding 55 wt%, film-forming properties may be lowered and cracking may occur. When the amount of the aminosilane compound is less than 1 wt%, adhesion, scratch resistance, and stability of the coating liquid may significantly deteriorate. As for the lower limit of the amount of the aminosilane compound (2), it is preferable to mix the aminosilane compound in an amount of 5 wt% or more to ensure improved scratch resistance, as shown by the following examples. More preferably, the aminosilane compound is mixed in an amount of 8 wt% or more.

When the epoxysilane compound (3) is mixed in an amount exceeding 60 wt%, transparency, adhesion, and scratch resistance of the resulting film and stability of the coating liquid may deteriorate. When the amount of the epoxysilane compound (3) is less than 1 wt%, film-forming properties may be lowered, and cracks may occur. As for the lower limit of the amount of the epoxysilane compound (3), it is preferred that the epoxysilane compound be mixed in an amount of 5 wt% or more to provide improved film-forming properties (cracking does not occur), as shown by the following examples. More preferably, the epoxysilane compound (3) is mixed in an amount of 10 wt% or more.

When the polymer ultraviolet absorber particles (4) are mixed in an amount exceeding 65 wt%, scratch resistance may be lowered. If the amount of the polymer ultraviolet absorber particles (4) is less than 0.1 wt%, weatherability may become insufficient.

When the curing catalyst (5) is mixed in an amount exceeding 30 wt%, stability of the coating liquid may be lowered. If the amount of the coating liquid is less than 0.1 wt%, curing may be insufficient.

When the inorganic ultraviolet-absorbing particles (6) are mixed in an amount exceeding 50 wt%, film-forming properties may be lowered. If the amount of the inorganic ultraviolet-absorbing particles (6) is mixed in an amount of less than 0.1 wt%, weatherability may be insufficient.

When the colloidal silica (6) is mixed in an amount exceeding 80 wt%, film-forming properties may be lowered and uniform dispersion may be difficult. When the colloidal silica (6) is mixed in an amount of less than 0.1 wt%, scratch resistance may be insufficient.

The solvent (7) is mixed in an amount of preferably 10 to 1000 parts by weight, preferably 10 to 800 parts by weight, and particularly preferably 50 to 600 parts by weight, for the total weight (100 parts by weight) of the components (1) to (6).

The first coating composition of the invention may also contain a leveling agent for the cured film and a lubricant. Examples of these additives include a copolymer of polyoxyalkylene and polydimethylsiloxane, a copolymer of polyoxyalkylene and fluorocarbon.
If necessary, a photostabilizer, a weatherability imparting agent, a colorant, or an antistatic agent may also be added.

The first coating composition is prepared by mixing the above components (1) to (7).
It is preferred that a mixed solution including at least the components (1) and (6) be prepared, and the component (4) be finally mixed.
Such separative preparation is preferred since storage stability of the coating composition is improved (for example, gelation does not occur).

The first coating composition of the invention may be formed into a cured film (cured coating) by curing the composition by a known method.
Specifically, the coating composition is applied to a substrate such as a resin molded product (injection molded product, film, sheet, or the like), on which a cured film is to be formed, by a known method such as spraying, immersion, curtain flow coating, bar coating, or roll coating to form a coating. The thickness of the coating is adjusted so that a first cured film has a thickness of preferably 1 to 15 µm, and more preferably 2 to 10 µm.
The first cured film is obtained by curing the coating by heating under appropriate curing conditions, normally at 80°C to 140°C, preferably 110°C to 140°C for 30 to 120 minutes.

The cured film obtained from the first coating composition of the invention contains organic ultraviolet absorber particles (the component (4)), inorganic ultraviolet-absorbing particles and/or colloidal silica (the component (6)) being dispersed therein. The first cured film of the invention preferably has a visible light transmittance of 80% or more, more preferably 85% or more and a haze value of 10% or less, more preferably 5% or less. Therefore, the first cured film exhibiting excellent resistance to ultraviolet rays and transparency can be obtained.
A matrix having an Si-O bond in which the organic particles (component (4)) and the inorganic particles and/or colloidal silica (component (6)) are dispersed is derived from the components (1), (2) and (3).

According to the first aspect of the invention, a transparent cured film having good adhesion to a resin substrate (in particular, a polycarbonate resin substrate) and exhibiting excellent scratch resistance and weatherability, a coating composition and a resin multilayer body can be provided.
The first resin multilayer body of the invention is economically advantageous since a polycarbonate resin multilayer body can be obtained without using a primer layer, and is useful as a structural material replacing glass.

The second aspect of the invention will be described below.
A cured film according to the second aspect of the invention (hereinafter often referred to as the second cured film) is obtained by dispersing organic particles having an ultraviolet-absorbing group and an average particle size of 1 to 200 nm in a matrix having an Si-O bond, and has a visible light transmittance of 80% or more, a haze value of 10 or less and boiling resistance. By dispersing organic particles containing an ultraviolet-absorbing group in a film as particles, a cured film improved in ultraviolet resistance and transparency can be obtained.

In the second aspect of the invention, the average particle size of organic particles is preferably 100 nm or less. If the average particle diameter of the organic particles exceeds 200 nm, transparency of the resin multilayer body may deteriorate.
The average particle diameter of the organic particles is defined as the mean value obtained by observing the cross-section of the thermally-cured film formed on a resin substrate using a transmission electron microscope (TEM), and processing the TEM image using image processing software.
As the organic particles according to the second aspect of the invention, a polymer ultraviolet absorber can be preferably used. The polymer ultraviolet absorber will be described later.
The particle components may be identified by high-angle annular dark-field (HAADF) elemental analysis.

The visible light transmittance and the haze value are the values of a cured film with a thickness of 5 µm.
The transmission to visible rays is defined as the "total amount of rays passing through a sample/amount of visible rays incident on a sample", and expressed as a percentage. The term "haze value" is defined as the degree of cloudiness of the inside or on the surface of a transparent material. Specifically, the haze value is defined as "scattered light transmittance/visible light transmittance", and is expressed as a percentage.

The boiling resistance is performance which serves as a standard of durability of the cured film. In the second aspect of the invention, the boiling resistance specifically means that, when a multilayer body obtained by forming a second cured film of the invention on a substrate is immersed in boiling water for one hour, cracking of the cured film, change in appearance as well as change in adhesion do not occur.

In a second cured film of the invention, the volume fraction of the organic particles is preferably 0.5 to 70 vol.%, more preferably 1 to 50 vol.%. By this volume fraction, a highly transparent cured film having improved transparency can be obtained. The volume fraction of the organic particles is defined as a value obtained by observing the cross-section of the thermally-cured film on a resin substrate by using a transmission electron microscope (TEM), processing the TEM image using image processing software to obtain an area percentage, and dividing the obtained value by "thickness of the observed sample/average particle diameter".

In the second cured film of the second aspect of the invention, the SiO₂-reduced weight derived from Si contained in the cured film is preferably 30 to 80 wt%, and more preferably 35 to 75 wt% of the total weight of the cured film. The above range realizes formation of a cured film with excellent film-forming properties (no cracking) and scratch resistance.
The SiO₂-reduced weight is determined by subjecting a cured film sample to thermogravimetric measurement on a petri dish made of Teflon (registered trademark) (under nitrogen, the temperature is raised at 20 °C/min from room temperature to 800°C) and calculating from the amount of a residue at 800°C.

The second cured film of the invention can be applied to a variety of resin substrates to form a resin multilayer body. The resin multilayer body is as described in the first aspect of the invention.

A second cured film of the invention can be prepared by curing the coating composition according to the second aspect of the invention which will be described later (hereinafter occasionally referred to as a second coating composition).
The second coating composition of the invention contains the following components (1') to (7'). Preferably, the second coating composition of the invention consists essentially of the following components (1') to (7'), and more preferably the second coating composition of the invention consists of the following components (1') to (7').
(1') an organoalkoxysilane compound or a polyorganoalkoxysilane compound
(2') an aminosilane compound;
(3') an epoxysilane compound;
(4') a blocked isocyanatosilane compound
(5') polymer ultraviolet absorber;
(6') a curing catalyst; and
(7') a solvent

### (1') Organoalkoxysilane compound or a polyorganoalkoxysilane compound

The organoalkoxysilane compound (1') is an organoalkoxysilane compound which does not contain an amino group, an expoxy group and an isocyanate group. Preferably, the organoalkoxysilane compound is a bifunctional alkoxysilane and a trifunctional alkoxysilane. Further, a partial condensate obtained by bonding these compounds via a siloxane bond (Si-O bond) (specifically, a polyorganoalkoxysilane compound) may be used. These compounds may be used either singly or in combination of two or more.
Examples of the trifunctional alkoxysilane include methyltrimethoxysilane, methyltriethoxysilane, methyltripropoxysilane, methyltributoxysilane, methyl-tris(2-methoxyethoxy)silane, ethyltrimethoxysilane, ethyltriethoxysilane, ethyltripropoxysilane, ethyltributoxysilane, ethyl-tris(2-methoxyethoxy)silane, hexyltrimethoxysilane, hexyltriethoxysilane, hexyltripropoxysilane, hexyltributoxysilane, decyltrimethoxysilane, decyltriethoxysilane, decyltripropoxysilane, decyltributoxysilane, fluorinated alkyl(trialkoxy)silane such as trifluoropropyltrimethoxysilane which is obtained by introducing a fluorine atom in a substituent, phenyltrimethoxysilane, phenyltriethoxysilane, vinyltrimethoxysilane, vinyltriethoxysilane, and γ-methacryloxypropylmethoxysilane. Also, methyldimethoxy(ethoxy)silane, ethyldiethoxy(methoxy)silane or the like having two kinds of alkoxy group can be given.
Examples of bifunctional alkoxysilane include dimethylmethoxysilane, dimethyldiethoxysilane, bis(2-methoxyethoxy)silane, diethyldiethoxysilane, diphenyldimethoxysilane and diphenyldiethoxysilane.

A preferred organoalkoxysilane compound (1') may be expressed by the following formula (1).

(R¹)ₘSi(OR²)₄₋ₘ (1)

wherein R¹, which may be the same or different, is independently an alkyl group having 1 to 10 carbon atoms, a fluorinated alkyl group, a vinyl group, a phenyl group, or an alkyl group having 1 to 3 carbon atoms substituted by a methacryloxy group, R² is an alkyl group having 1 to 4 carbon atoms or an alkyl group having an ether group, and m is an integer of 1, or 2.

Specific examples of the polyorganoalkoxysilane compound (1') include "MTMS-A", manufactured by Tama Chemicals Co. , Ltd., "SS-101", manufactured by COLCOAT Co., Ltd., and "AZ-6101", "SR2402" and "AY42-163", manufactured by Dow Corning Toray Co., Ltd.

### (2') Aminosilane compound

The aminosilane compound (amino group-containing silane compound) (2') is the aminosilane compound (2) in the first aspect containing no isocyanate group.

### (3') Epoxysilane compound

The epoxysilane compound (epoxy group-containing silane compound) (3') is the epoxysilane compound (3) in the first aspect containing no isocyanate group.

### (4') Blocked isocyanatosilane compound

Blocked isocyanatosilane (4') is an isocyanatosilane compound in which the isocyanate group is protected with a blocking agent such as oxime, and may be de-blocked by heating to activate (regenerate) the isocyanate group.
An isocyanatosilane compound (isocyanate group-containing silane compound) is an alkoxysilane compound which contains an isocyanate group but does not contain an amino group and an epoxy group. Specific examples include γ-isocyanatopropyltrimethoxysilane, γ-isocyanatopropyltriethoxysilane and an isocyanatosilane compound. Preferable isocyanatosilane compounds are γ-isocyanatopropyltrimethoxysilane, γ-isocyanatopropytriethoxysilane and an isocyanatesilane compound. In the second aspect of the invention, a compound in which the isocyanate group of the above-mentioned isocyanatosilane compounds is blocked is used. Preferable blocked isocyanatosilane compound is blocked isocyanatopropyltriethoxysilane.

Blocking agents of the isocyanate group include oxime compounds such as acetoxime, 2-butanoneoxime and methylisobutylketoxime, lactams such as ε-caprolactam, alkylphenol such as monoalkylphenol (e.g. cresol, nonylphenol), dialkylphenols such as 3,5-xylenol and di-t-butylphenol, trialkylphenols such as trimethylphenol, activated methylene compounds such as malonic acid diesters such as diethyl malonate, acetylacetone and acetoacetic acid esters such as ethyl acetoacetate, alcohols such as methanol, ethanol and n-butanol, hydroxyl group-containing ethers such as methylcellosolve and butylcellosolve, hydroxyl group-containing esters such as ethyl lactate and amyl lactate, mercaptanes such as butylmercaptane and hexylmercaptane, acidamides such as acetoanilide, acrylamide and dimer acid amide, imidazoles such as imidazole and 2-ethylimidazole, pyrazoles such as 3,5-dimethylpyrazole, triazoles such as 1,2,4-triazole, and imides such as succinimide and phthalimide. In order to control the dissociation temperature of the blocking agent, a catalyst such as dibutyltin dilaurate may be used in combination.

### (5') Polymer ultraviolet absorber

The polymer ultraviolet absorber (5') is the same as the polymer ultraviolet absorber particles (4) in the first aspect.

### (6') Curing catalyst

The curing catalyst (6') is the same as that explained in the first aspect.

### (7') Solvent

The second coating composition of the invention is used in the state in which the coating composition is mixed in water and/or an organic solvent. The solvent (7') used in the second aspect of the invention is the same as that explained in the first aspect.

In the second aspect of the invention, the amounts of the components (1') to (7') may be determined appropriately. For example, the components (1') to (7') are used in amounts as follows.
(1') an organoalkoxysilane compound or a polyorganoalkoxysilane compound: preferably 10 to 80 wt%, more preferably 15 to 75 wt%
(2') an aminosilane compound: 1 to 60 wt%, more preferably 3 to 40 wt%
(3') an epoxysilane compound: 1 to 60 wt%, more preferably 5 to 50 wt%
(4') a blocked isocyanatosilane compound: 1 to 60 wt%, more preferably 5 to 60 wt%
(5') a polymer ultraviolet absorber: 0.1 to 50 wt%, more preferably 5 to 50 wt%
(6') a curing catalyst: 0.1 to 40 wt%, more preferably 0.1 to 30 wt%
(7') a solvent: 5 to 1000 parts by weight, more preferably 20 to 800 parts by weight for 100 parts by weight of the total of the components (1') to (6').

When the organoalkoxysilane or polyorganoalkoxysilane compound (1') is mixed in an amount exceeding 80 wt%, adhesion may be lowered. When the amount thereof the is less than 10 wt%, scratch resistance or film-forming properties may deteriorate (cracking or the like).

When the aminosilane compound (2') is mixed in an amount exceeding 60 wt%, film-forming properties may be lowered (cracking). When the amount of the aminosilane compound (2') is less than 1 wt%, adhesion and scratch resistance may be lowered significantly. As for the lower limit of the amount of the aminosilane compound (2'), it is preferred to mix the aminosilane compound in an amount of 3 wt% or more to allow scratch resistance to be exhibited, as shown by the following examples.

When the epoxysilane compound (3') is mixed in an amount exceeding 60 wt%, transparency, adhesion, and scratch resistance of the resulting film and stability of the coating liquid may deteriorate. When the amount of the epoxysilane compound (3') is less than 1 wt%, film-forming properties may be lowered (cracking may occur). As for the lower limit of the amount of the epoxysilane compound (3'), it is preferred that the epoxysilane compound be mixed in an amount of 5 wt% or more to provide improved film-forming properties, as shown by the following examples. More preferably, the epoxysilane compound (3') is mixed in an amount of 10 wt% or more.

When the blocked isocyanatosilane compound (4') is mixed in an amount exceeding 60 wt%, film-forming properties of the resulting film may deteriorate. When the amount of the blocked isocyanatosilane compound (3') is less than 1 wt%, stability of the coating liquid may be lowered. As for the lower limit of the amount of the blocked isocyanatosilane compound (4'), it is preferred that the blocked isocyanatosilane compound be mixed in an amount of 5 wt% or more to provide improved durability (moisture resistance), as shown by the following examples. More preferably, the blocked isocyanatosilane compound (4') is mixed in an amount of 10 wt% or more. The amount of the blocked isocyanatosilane compound (4') is the total of an isocyanatosilane compound and a blocking agent.
The mixing molar ratio of the isocyanatosilane compound and the blocking agent is normally 0.9 to 1.1:0.9 to 1.1, preferably 0.95 to 1.05:0.95 to 1.05.

When the polymer ultraviolet absorber (5') is mixed in an amount exceeding 50 wt%, scratch resistance may be significantly lowered. If the amount of the polymer ultraviolet absorber (5') is less than 0. 1 wt%, weatherability may be insufficient.

When the curing catalyst (6') is mixed in an amount exceeding 40 wt%, stability of the coating liquid may be lowered. If the amount of the curing catalyst is less than 0.1 wt%, curing may be insufficient.

The amount of the solvent (7') is preferably 5 to 1000 parts by weight, more preferably 20 to 800 parts by weight, and particularly preferably 50 to 600 parts by weight for 100 parts by weight of the total amount of the components (1') to (6').

The second coating composition of the invention may also contain a leveling agent for the cured film and a lubricant. Examples of these additives include a copolymer of polyoxyalkylene and polydimethylsiloxane, a copolymer of polyoxyalkylene and fluorocarbon.
If necessary, a photostabilizer, a weatherability imparting agent, a colorant, or an antistatic agent may also be added.

The second coating composition is prepared by mixing the above components (1') to (7').
It is preferred that a first mixed solution including at least the components (1') and (4') be prepared, and the component (2') be finally mixed.
Such separative preparation is preferred since the storage stability of the coating composition is improved (e.g. gelation does not occur).
For example, after mixing the components (1'), (3'), and (5') to (7'), the component (4') is mixed, and the component (2') be finally mixed.
The component (7') may be added after the preparation of the coating composition, whereby the coating composition can be diluted.

The second coating composition of the invention may be formed into a cured film (cured coating) by curing the composition using a known method. Specifically, the coating composition is applied to a substrate such as a resin molded product (injection molded product, film, sheet, or the like) on which a cured film is formed using a known method such as spray coating, immersion coating, curtain flow coating, bar coating, or roll coating to form a coating. The thickness of the coating is adjusted so that the cured film has a thickness of preferably 1 to 15 µm, and more preferably 2 to 10 µm.
A cured film can be obtained by curing the coating by heating under appropriate curing conditions, normally at 80°C to 190°C, preferably 100°C to 140°C for 10 minutes to 24 hours, preferably 30 minutes to 3 hours.

A cured film obtained from the second coating composition of the invention includes organic particles (the component (5')) dispersed therein. The second cured film of the invention preferably has a visible light transmittance of 80% or more, more preferably 85% or more, and a haze value of 10% or less, more preferably 5% or less. Therefore, the cured film exhibits excellent resistance to ultraviolet rays and transparency.
A matrix having an Si-O bond in which the organic particles (component (5')) are dispersed is derived from the components (1'), (2'), (3') and (4').

A multilayer body obtained by stacking a substrate and a cured film obtained from the second coating composition of the invention has improved scratch resistance, weatherability and boiling resistance.

According to the second aspect of the invention, a cured film exhibiting sufficient adhesion to a resin substrate such as a polycarbonate resin substrate without using a primer and having excellent scratch resistance, weatherability, and boiling resistance which is a standard of durability, a coating composition and a resin multilayer body can be provided.

The third aspect of the invention will be described below.
A cured film according to the third aspect of the invention (hereinafter occasionally referred to as the third cured film) is obtained by dispersing organic particles having an ultraviolet-absorbing group and having an average particle size of 1 to 200 nm and inorganic fine ultraviolet-absorbing particles and/or colloidal silica having an average particle size of 1 to 200 nm in a matrix having an Si-O bond. The cured film has a visible light transmittance of 80% or more, a haze value of 10 or less and boiling resistance. By dispersing the organic particles containing an ultraviolet-absorbing group in a film as fine particles, a cured film improved in ultraviolet resistance and transparency can be obtained. In addition, by dispersing the inorganic ultraviolet-absorbing particles and/or colloidal silica in a film as fine particles, a multifunctional cured film having improved scratch resistance, ultraviolet-blocking properties, initial adhesion properties and durability (boiling resistance) can be obtained.

In the third aspect of the invention, the average particle size of the organic particles, inorganic ultraviolet-absorbing particles and colloidal silica is 200 nm or less. In respect to transparency, the average particle diameter is preferably 100 nm or less. If the average particle diameter exceeds 200 nm, transparency of the resin multilayer body may be lowered.

As the organic particles according to the third aspect of the invention, a polymer ultraviolet absorber may be preferably used. The polymer ultraviolet absorber is the same as the one described in the second aspect.

The definition of the average particle sizes of organic particles, inorganic ultraviolet-absorbing particles and colloidal silica, the method of identifying the particle components, and the definition of visible light transmittance, the haze value, and the boiling resistance are the same as explained in the first aspect or the second aspect.

In a third cured film of the invention, the volume fraction of the organic particles in the cured film is preferably 0.5 to 70 vol%, more preferably 1 to 50 vol%. Due to this volume fraction, the cured film has a high degree of transparency and is improved in ultraviolet-absorbing performance.
The method for measuring the volume fraction is the same as that explained in the second aspect.

In the third cured film of the invention, the oxide-reduced weight derived from the inorganic components contained in the cured film is preferably 30 to 80 wt%, more preferably 35 to 75 wt%. Within this range, a cured film with improved film-forming properties (no cracking) and scratch resistance can be obtained.
The oxide-reduced weight derived from the inorganic components is determined by subjecting a cured film sample to thermogravimetric measurement on a petri dish made of Teflon (registered trademark) (under nitrogen, the temperature is raised at 20 °C/min from room temperature to 800°C) and calculating from the amount of a residue at 80°C.

The third cured film of the invention can be applied to various resin substrates to form a resin multilayer body. The resin multilayer is the same as that explained in the first aspect.

The third cured film of the invention can be obtained, for example, by curing a coating composition (hereinafter occasionally referred to as a third coating composition).
The third coating composition of the invention contains the following components (1") to (8"). Preferably, the third coating composition of the invention consists essentially of the following components (1") to (8"), and more preferably the third coating composition of the invention consists of the following components (1") to (8").
(1") an organoalkoxysilane compound or a polyorganoalkoxysilane compound;
(2") an aminosilane compound;
(3") an epoxysilane compound;
(4") a blocked isocyanatosilane compound
(5") a polymer ultraviolet absorber;
(6") inorganic ultraviolet-absorbing particles and/or colloidal silica;
(7") a curing catalyst
(8") a solvent

### (1") Organoalkoxysilane compound or polyorganoalkoxysilane compound

The organoalkoxysilane compound (1") is the same as that explained in the second aspect.

### (2") Aminosilane compound

The aminosilane compound (amino group-containing silane compound) (2") is the same as that explained in the second aspect.

### (3") Epoxysilane compound

The epoxysilne compound (epoxy group-containing silane compound) (3") is the same as that explained in the second aspect.

### (4") Blocked isocyanatosilane compound

The blocked isocyanatosilane compound (4") is the same as that explained in the second aspect.

### (5") Polymer ultraviolet absorber

The polymer ultraviolet absorber (5") is the same as that explained in the second aspect.

### (6") Inorganic ultraviolet-absorbing particles and/or colloidal silica

The inorganic ultraviolet-absorbing particles (6") are the same as that explained in the first aspect.

The colloidal silica (6") is the same as that explained in the first aspect.

### (7") Curing catalyst

The curing catalyst (7") is the same as that explained in the first aspect.

### (8") Solvent

The third coating composition of the invention is used in the state in which it is mixed in water and/or an organic solvent. The solvent (8") used in the third aspect of the invention is the same as that explained in the first aspect.

In the third aspect of the invention, the amounts of the components (1") to (8") may be determined appropriately. For example, the components (1") to (8"') are used in amounts as follows.
(1") Organoalkoxysilane compound or polyorganoalkoxysilane compound: preferably 10 to 80 wt%, more preferably 15 to 75 wt%.
(2") Aminosilane compound: 1 to 60 wt%, more preferably 3 to 40 wt%
(3") Epoxysilane compound: 1 to 60 wt%, more preferably 5 to 50 wt%
(4") Blocked isocyanatosilane compound: 1 to 60 wt%, more preferably 5 to 60 wt%
(5") Polymer ultraviolet absorber: 0.1 to 50 wt%, more preferably 5 to 50 wt%
(6") Inorganic ultraviolet-absorbing particles and/or colloidal silica:
   Preferably 0.1 to 50 wt%, and more preferably 0.1 to 30 wt% if the component (6") is only the inorganic ultraviolet-absorbing particles;
   Preferably 0.1 to 80 wt%, and more preferably 0.1 to 50 wt% if the component (6") is only the colloidal silica; and
   Preferably 0.1 to 50 wt% of the inorganic ultraviolet-absorbing particles, more preferably 0.1 to 30 wt% and preferably 0.1 to 80 wt%, more preferably 0.1 to 50 wt% of the colloidal silica if the component (6") is the inorganic ultraviolet-absorbing particles and the colloidal silica
(7") Curing catalyst: 0.1 to 40 wt%, more preferably 0.1 to 30 wt%
(8") Solvent: 5 to 1000 parts by weight, more preferably 20 to 800 parts by weight for 100 parts by weight of the total of the components (1") to (7").
The amount of each of the components (1") to (7") is the weight percentage of the total amount of the components (1") to (7").

When the organoalkoxysilane compound or the polyorganoalkoxysilane compound (1") is mixed in an amount exceeding 80 wt%, adhesion may be lowered. When the amount of the organoalkoxysilane compound or the polyorganoalkoxysilane compound (1") is less than 10 wt%, scratch resistance or film-forming properties may deteriorate (cracking or the like).

When the aminosilane compound (2") is mixed in an amount exceeding 60 wt%, film-forming properties may be lowered (cracking). When the amount of the aminosilane compound (2") is less than 1 wt%, adhesion and scratch resistance may be lowered significantly. As for the lower limit of the amount of the aminosilane compound (2"), it is preferred to mix the aminosilane compound in an amount of 3 wt% or more to allow scratch resistance to be exhibited, as shown by the following examples.

When the epoxysilane compound (3") is mixed in an amount exceeding 60 wt%, transparency, adhesion, and scratch resistance of the resulting film and stability of the coating liquid may deteriorate. When the amount of the epoxysilane compound (3") is less than 1 wt%, film-forming properties may be lowered (cracking). As for the lower limit of the amount of the epoxysilane compound (3"), it is preferred that the epoxysilane compound be mixed in an amount of 5 wt% or more to allow film-forming properties to be exhibited, as shown by the following examples. More preferably, the epoxysilane compound (3") is mixed in an amount of 10 wt% or more.

When the blocked isocyanatosilane compound (4") is mixed in an amount exceeding 60 wt%, film-forming properties of the resulting film may deteriorate. When the amount of the blocked isocyanatosilane compound (4") is less than 1 wt%, stability of the coating liquid may be lowered. As for the lower limit of the amount of the blocked isocyanatosilane compound (4"), it is preferred that the blocked isocyanatosilane compound be mixed in an amount of 5 wt% or more to provide improved durability (moisture resistance), as shown by the following examples. More preferably, the blocked isocyanatosilane compound (4") is mixed in an amount of 10 wt% or more.
The above-mentioned amount of the blocked isocyanatosilane compound (4") is the total amount of the isocyanatosilane compound and the blocking agent.
The mixing molar ratio of the isocyanatosilane compound and the blocking agent is normally 0.9 to 1.1:0.9 to 1.1, preferably 0.95 to 1.05:0.95 to 1.05.

When the polymer ultraviolet absorber (5") is mixed in an amount exceeding 50 wt%, scratch resistance may be lowered significantly. If the amount of the polymer ultraviolet absorber (5") is less than 0.1 wt%, weatherability may be insufficient.

When the inorganic ultraviolet-absorbing particles (6") are mixed in an amount exceeding 50 wt%, film-forming properties may be lowered. If the amount of the inorganic ultraviolet-absorbing particles (6") is less than 0.1 wt%, weatherability may be insufficient.

When the colloidal silica (6") is mixed in an amount exceeding 80 wt%, film-forming properties may be lowered or uniform dispersion may be difficult. If the amount of the colloidal silica is less than 0.1 wt%, sufficient scratch resistance imparting effects may not be obtained.

When the curing catalyst (7") is mixed in an amount exceeding 40 wt%, stability of the coating liquid may deteriorate. If the amount of the curing catalyst (7") is less than 0.1 wt%, curing may be insufficient.

The amount of the solvent (8") is preferably 5 to 1000 parts by weight, more preferably 20 to 800 parts by weight, and particularly preferably 50 to 600 parts by weight for 100 parts by weight of the total amount of the components (1") to (7").

The third coating composition of the invention may also contain a leveling agent for the cured film and a lubricant. Examples of these additives include a copolymer of polyoxyalkylene and polydimethylsiloxane and a copolymer of polyoxyalkylene and fluorocarbon.
If necessary, a photostabilizer, a weatherability imparting agent, a colorant, or an antistatic agent may also be added.

The third coating composition is prepared by mixing the above components (1") to (8").
It is preferred that a first mixed solution containing at least the components (1") and (4") be prepared, then the component (2") be mixed, and the component (6") be finally mixed. It is further preferred that a first mixed solution containing at least the components (1"), (3"), (5") and (7") be prepared, then the component (4") be mixed to prepare a second mixed solution, subsequently the component (2") be mixed to prepare a third mixed solution, and the component (6") be mixed finally to prepare the coating composition.
It is preferable to separately mix the components as mentioned above since storage stability of the coating composition is improved (for example, gelation does not occur). This effect is significantly exhibited particularly when the amount of water is increased due to an increase in the amount of the component (5") or the component (6").
For example, after mixing the components (1"), (3"), (5"), (7") and (8"), the component (4") is mixed. Then, the component (2") is mixed, and the component (6") is finally mixed.
The component (8") is added after the preparation of the coating composition, whereby the coating composition can be diluted.

The liquid storage stability of the mixture such as the coating composition of the third aspect of the invention is known to be easily affected by the pH value of the liquid (see, for example, "Application of Sol-Gel Method to Nanotechnology/edited by Sumio Sakuhana", CMC Publishing Co., Ltd.). In the production of the coating composition of the third aspect of the invention, since an acid component as the component (7") and basic components as the components (2") and (7") are mixed, the pH of the liquid is changed according to the order of mixing.
As for the pH value of the liquid, specifically, the pH value of the liquid evaluated by means of a portable pH meter (Checker 1, manufactured by Hanna Instruments, Co., Ltd.) which has been calibrated with a standard pH calibration solution, it is preferred that the first mixed solution and the second mixed solution as mentioned above have a pH value of 6 or less and the third mixing solution and the final mixed solution have a pH value of 7 or less. Especially, if the pH of the liquid exceeds 8 in preparing the third mixed solution, i.e., mixing the component (2"), stability of the coating liquid may deteriorate. From the start to the completion of the production of the coating composition, it is preferred that the liquid be kept acidic. In other words, it is preferred that the coating composition be produced in order that such a condition can be maintained.

Further, it is preferred that the first mixed solution, the second mixed solution and the third mixed solution be subjected to heat treatment after mixing of the components. The heating temperature is 30°C to 130°C, more preferably 50°C to 90°C. The heating time is 30 minutes to 24 hours, more preferably 1 hour to 8 hours. There are no restrictions on the method for mixing and heating insofar as uniform mixing and heating can be attained. Heating in the above-mentioned manner allows a condensation reaction of the components (1"), (2"), (3") and (4") in the liquid to proceed, leading to improvement in durability such as boiling resistance. The reaction of the components (1"), (2"), (3") and (4") can be analyzed by solution Si-NMR, and a suitable structure can be designed based on the results of analysis. If the heating is conducted at a temperature lower than 30°C or for shorter than 1 hour, the reaction proceeds extremely slowly in many cases. When the heating is conducted at a temperature exceeding 130°C or for 24 hours or longer, the reaction of the components (1"), (2"), (3") and (4") may proceed excessively, whereby the liquid may not be applied since gelation or thickening occurs.

It is preferred that the final liquid (coating composition) prepared after mixing the component (6") be subjected to heat treatment. If mixing is performed at room temperature, the liquid tends to be affected by stirring efficiency. If the degree of dispersion of the component (6") is low due to the poor stirring efficiency, transparency of the cured film may be lowered (the transmittance of entire rays is lowered and the haze is increased). The heating temperature is 30°C to 130°C, more preferably 50°C to 90°C, and the heating time is 5 minutes to 10 hours, more preferably 15 minutes to 6 hours. There are no particular restrictions on the method for mixing and heating insofar as the uniform mixing and heating can be attained. If the heating is conducted at a temperature lower than 30°C for shorter than 5 minutes, the effect of heat treatment cannot be exhibited sufficiently in many cases. If the heating is conducted at a temperature exceeding 130°C or for 10 hours or longer, the liquid may not be applied since gelation or thickening occurs.
In the following examples, evaluation results are given for a cured film produced after allowing a coating liquid to stand for one week. There are no particular restrictions on the period for which a liquid is allowed to stand before production of a cured film.

The method for curing the third coating composition of the invention is the same as that explained in the second aspect of the invention.

In the cured film obtained from the third coating composition of the invention, organic particles (component (5")), inorganic ultraviolet-absorbing particles and/or colloidal silica (component (6")) are dispersed. The third cured film of the invention has a visible light transmittance of preferably 80% or more, more preferably 85% or more, and has a haze value of 10% or less, more preferably 5% or less. Such a cured film is improved not only in ultraviolet resistance but also in transparency.
The matrix having an Si-O bond in which the organic particles (component (5")) and the inorganic ultraviolet-absorbing particles and/or colloidal silica (component (6")) are dispersed is derived from the components (1"), (2"), (3") and (4").

The multilayer body obtained by stacking a substrate and cured films obtained from the third coating composition is improved in scratch resistance, weatherability, flexibility and boiling resistance.

The third aspect of the invention can provide a cured film exhibiting sufficient adhesion to a resin substrate such as a polycarbonate resin substrate without using a primer and having excellent scratch resistance, flexibility, ultraviolet-absorbing performance and boiling resistance, which serves as a standard of durability, a coating composition and a resin multilayer body.

### EXAMPLES

The following components and the like were used in Examples 1 to 14 and Comparative Examples 1 to 8.

### Component (1):

MTMS-A (trifunctional polyalkoxysilane compound)
Lot No. 030601 (manufactured by Mama Chemicals Co., Ltd.)
Solid content (nonvolatile components): 67% (from the analysis sheet prepared by the manufacturer)
M Silicate 51 (tetrafunctional polyalkoxysilane compound)
Lot No. 03070 (manufactured by Tama Chemicals Co., Ltd.)
Solid content (nonvolatile components) : 51% (from the analysis sheet prepared by the manufacturer)

### Component (4):

ULS-1385MG (ultraviolet-absorbing skeleton:
   benzotriazole-based), manufactured by Ipposha Oil Industries Co., Ltd. (water dispersion/solid content: 30%)

### Component (6):

Needral U-15 (inorganic ultraviolet-absorbing particles), manufactured by Taki Chemical Co., Ltd. (water dispersion, cerium oxide concentration: 15 wt%, particle size of 8 nm or less according to the analysis sheet prepared by the manufacturer)
Snowtex O-40 (colloidal silica), manufactured by Nissan Chemical Industries, Ltd. (water dispersion, colloidal silica concentration: 40 wt%, particle size of 10 to 20 nm according to the analysis sheet prepared by the manufacturer)

### Polycarbonate substrate:

IV2200R (weatherability grade), manufactured by Idemitsu Kosan Co., Ltd. (former Idemitsu Petrochemical Corporation) having a thickness of 3 mm (visible light transmittance: 90%, haze value: 1%)

### Example 1

### [Preparation of a coating liquid]

A coating liquid was prepared using the components in amounts shown in Table 1.
A dispersion liquid of inorganic ultraviolet-absorbing particles (component (6): Needral U-15, manufactured by Taki Chemical Co., Ltd., water dispersion, cerium oxide concentration: 15 wit%), ethyl cellosolve (component (7)) and ion exchange water were placed in a 50 g-volume sample tube. While stirring at 700 rpm, acetic acid (component (5)), tetramethoxysilane (component (1)) and a 20% methanol solution of p-toluenesulfonic acid (component (5)) were added dropwise to the mixture in this order. Each component was added for 1 minute. Then, the mixture was stirred for 10 minutes at room temperature. The resulting liquid is referred to as liquid A.
In a 20 g-volume sample tube, methyltrimethoxysilane (component (1)), ethylcellosolve (component (7)), and 3-glycydoxypropyltrimethoxysilane (component (3)) were placed, stirred at 500 rpm for 10 minutes. The resulting liquid is referred to as liquid B.
The liquid A was added dropwise to the liquid B for 2 minutes, and the mixture was stirred at 700 rpm for 30 minutes at room temperature. Subsequently, 3-aminopropytrimethoxysilane (component (2)) was added dropwise for 2 minutes, and stirred at room temperature for 24 hours.
Finally, with stirring, a dispersion liquid of polymer ultraviolet-absorbing nanoparticles (component (4): ULS-1385 MG, manufactured by manufactured by Ipposha Oil Industries Co., Ltd, ultraviolet-absorbing skeleton species: benzotriazole, water dispersion, solid content: 30 wt%, copolymerization ratio of the ultraviolet-absorbing monomer in the solid matters: about 50 wt%) was added dropwise for 3 minutes. Subsequently, the mixture was allowed to stand at 25°C in a dark place for one week.

### [Preparation of a resin multilayer body]

The coating liquid obtained as described above was applied by using a bar coater to the surface of a polycarbonate molded product with a thickness of 3 mm so that the resulting cured film had a thickness of 6 µm. The liquid was thermally-cured at 130°C for two hours. The physical properties of the resulting cured film are shown in Table 1.
In the table, the content of the polymer ultraviolet-absorbing particles (wt%) in the solid matters means the ratio of the polymer ultraviolet-absorbing particles (wt%) in the stolid matters of the coating composition.
The volume fraction of the organic particles in the cured film prepared in Example 1 was measured by the following method. Accordingly, the volume fraction was found to be 6 vol%.
The total reduced mass of the inorganic oxides derived from the Si compounds and the inorganic ultraviolet-absorbing particles was measured by the following method, and found to be 58 wt%.

### [Evaluation method]

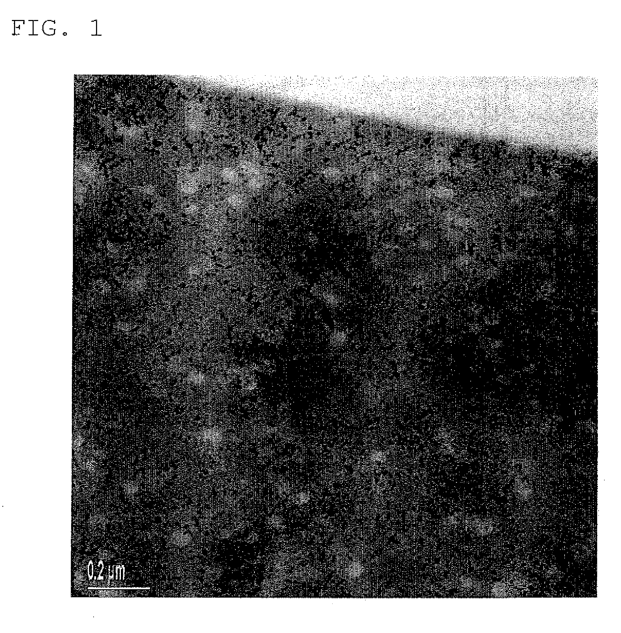

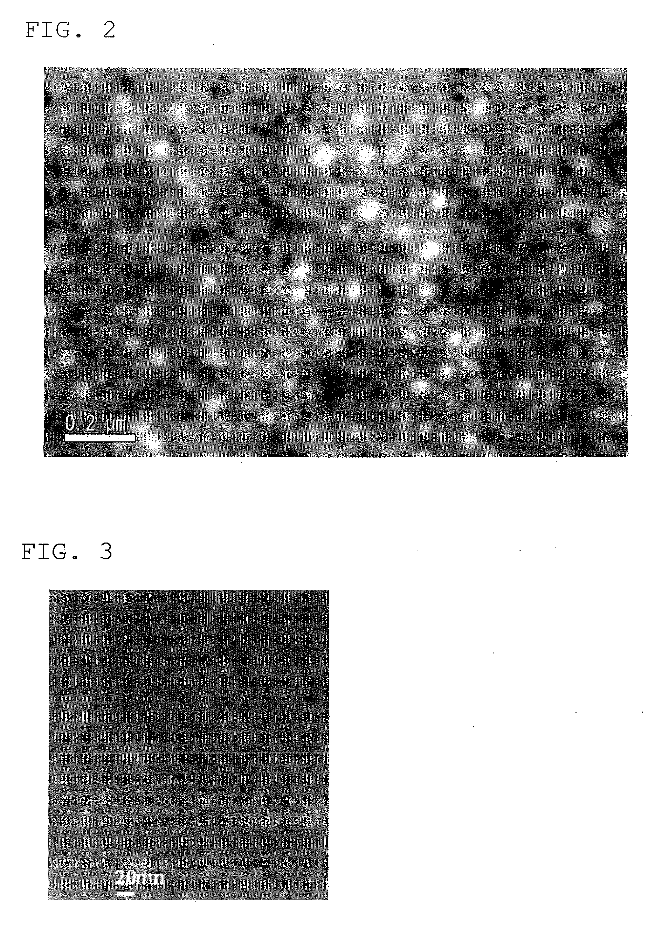

(1) Average particle diameter of the organic particles in the cured film (in the solid matters): The cross-section of the thermally-cured film was observed by means of a TEM (transmission electron microscope), and 10 particles present in a 1 µm x 1 µm square were selected. By means of free software (NIH Image 1.63, manufactured by National Institute of Health, U.S.), the average particle diameter thereof was obtained. In Examples 1 to 14, the average particle diameter was 40 to 60 nm. The cross sectional views (magnification: x100,000) of thermally-cured films prepared in Example 1 and Example 12 are shown in FIGs. 1 and 2. These photographs are TEM cross sectional photographs of the cured film obtained in Example 1 and Example 12. The black dots indicate inorganic ultraviolet-absorbing particles and the white dots indicate organic ultraviolet-absorbing particles. From the photographs, it is understood that the both particles are dispersed in a size of 200 nm (=0.2 µm) or less.

(2) Average particle size of inorganic ultraviolet-absorbing particles and colloidal silica in the cured film (in the solid matters): Measured by the same method as in the case of the organic particles. Both are indicated by black dots in the TEM photograph. In Examples 1 to 7, 13 and 14, the average particle size of inorganic ultraviolet-absorbing particles was 5 to 10 nm. The average particle size of the colloidal silica was 23 nm in Examples 13 and 14.

(3) Volume fraction of the organic particles in the cured film: The cross-section of a thermally-cured film on a resin substrate was observed by using a transmission electron microscope (TEM) . The area of the particles present in a 1.5 µm x 1.5 µm square was calculated using the above-mentioned free software (manufactured by the National Institutes of Health, the U.S.). The obtained value was divided by "thickness of sample/average particle diameter of organic particles" to determine the volume fraction.

(4) The total reduced weight of the inorganic oxide contained in the cured film: The ratio of the oxide was determined as follows: A sample obtained by thermally curing the coating liquid was subjected to thermogravimetric measurement on a petri dish made of Teflon (registered trademark) (under nitrogen, the temperature was raised at 20 °C/min. from room temperature to 800°C) and calculating the ratio of the amount of a residue at 800°C.

(5) Stability of the coating liquid: The coating composition was airtightly stored at room temperature for 14 days. The occurrence of gelation was visually evaluated. A coating composition showing no gelation was subjected to viscosity measurement by using a turning fork-type vibration viscometer SV-10 manufactured by A&D Co., Ltd. A coating composition of which the ratio of change from start was within 3 times or less was evaluated as "Good".

(6) Film appearance: The appearance of the cured film (presence or absence of foreign matters or spot pattern) and the presence or absence of cracks were visually confirmed.

(7) Visible light transmittance and haze value: By means of a direct-reading haze computer (HGM-2DP, manufactured by Suga Test Instruments Co., Ltd.), measurement was performed on a multilayer body obtained by forming a cured film on a polycarbonate substrate.

(8) Scratch resistance of the cured film: The surface of the cured film was rubbed back and forth 10 times with #0000 steel wool at a load of 500 g and a speed of 20 mm/sec. The surface scratch state was visually evaluated according to the following four grades.
1. No scratches
2. A small number of scratches
3. Scratches formed on the half of the rubbed surface
4. Scratches formed on the entire rubbed surface

(9) Adhesion between the cured film and the resin substrate: According to JIS K5400, the sample was cut crosswise, 11 times in each direction, using a razor blade at intervals of 2 mm to form 100 squares. Subsequently, a commercially available cellophane adhesive tape (CT-24 (width: 24 mm), manufactured by Nichiban Co., Ltd.) was caused sufficiently to adhere to the surface with the cushion of finger, and then peeled back and removed from the surface at right angles in a single action. The number (X) of remaining unpeeled squares was counted and indicated as X/100.

(10) Organic chemical resistance of the cured film: 1 cc of acetone was dropped onto the cured film. The surface of the cured film was wiped with a cloth after five minutes, and the conditions of the film were visually observed. A film which did not change was evaluated as "Good".

(11) Heat resistance: By means of a heat resistance testing machine (PS-222, manufactured by TABI ESPEC Corporation), measurement was performed at 110°C for 720 hours. Heat resistance was evaluated from the degree of change in adhesion before and after the test.

(12) Resistance to thermal shock: A thermal shock test was performed (using a testing machine TSA-200D-W, manufactured by ESPEC Corp. One cycle: -30°C for 1 hour, 110°C for 1 hour). The test was performed for 100 cycles. Resistance to thermal shock was evaluated from the degree of change in adhesion before and after the test.

(13) Weatherability: A xenon weatherometer test was performed (Ci165, manufactured by Atlas Corporation, output: 6.5 kW, black panel temperature: 63°C, humidity: 50%). Weatherability was evaluated from the degree of change in adhesion before and after the test.

(14) Dispersion state of the organic ultraviolet-absorbing particles, inorganic ultraviolet-absorbing particles and colloidal silica (nanoparticles): A dispersion state in which the particles are dispersed with an average particle diameter of 200 nm or less is evaluated as good, a dispersion state in which the particles are dispersed with an average particle diameter exceeding 200 nm is evaluated as poor, and a dispersion state in which, although particles with a particle diameter of 200 nm or less are present, the amoeba-like fused particles with a diameter of 200 nm or more are also present, is evaluated as not good.

### Examples 2 to 7

Coating liquids and multilayer bodies were prepared and evaluated in the same manner as in Example 1, except that the components and the amounts were changed to those shown in Table 1. The evaluation results are shown in Table 1.

### Example 8

A coating liquid was prepared in the same manner as in Example 1, except that 1.25 g of colloidal silica (Snowtex O-40, manufactured by Nissan Chemical Industries, Ltd. (water dispersion, colloidal silica concentration of 40 wt%) instead of 3.3 g of the inorganic ultraviolet-absorbing particles and the other components were prepared as shown in Table 2. A resin multilayer body was prepared from this coating composition, and evaluated. The results of the evaluation are shown in Table 2.
In the table, the content (wt%) of the inorganic oxide in the solid matters means the ratio of the inorganic oxide (e.g. SiO₂, CeO₂) in the solid matters in the coating composition. The content (wt%) of the polymer ultraviolet-absorbing particles in the solid matters means a value obtained from the mixing ratio of the polymer ultraviolet-absorbing particles in the solid matters when preparing the composition.
As for the cured film prepared in Example 8, the volume fraction of the organic particles in the cured film was 8 vol%, and the total reduced mass of the inorganic oxide derived from Si compounds and colloidal silica was 59 wt%.

### Examples 9 to 12

Coating liquids and multilayer bodies were prepared as shown in Table 2 and evaluated in the same manner as in Example 8. The evaluation results are shown in Table 2.

### Example 13

A coating liquid was prepared in the same manner as in Example 1, except that 1.25 g of colloidal silica and 2.6 g of inorganic ultraviolet-absorbing particles were used instead of 3.3 g of the inorganic ultraviolet-absorbing particles as the component (6), and the other components were prepared as shown in Table 2. A resin multilayer body was prepared from this coating composition, and evaluated. The evaluation results are shown in Table 2.
As for the cured film prepared in Example 13, the volume fraction of the organic particles in the cured film was 6 vol%, and the total reduced mass of the inorganic oxide derived from the Si compounds, the colloidal silica and the inorganic ultraviolet-absorbing particles was 63 wt%.

### Example 14

A coating liquid and a multilayer body were prepared as shown in Table 2 and evaluated in the same manner as in Example 13. The evaluation results are shown in Table 2.

### Comparative Examples 1 to 8

Coating liquids and multilayer bodies were prepared as shown in Tables 3 and 4 and evaluated in the same manner as in Example 1. The evaluation results are shown in Tables 3 and 4. In Comparative Examples 4 and 8, the visible light transmittance or the haze could not be measured.

**Table 1**

| | Component | | Example 1 | Example 2 | Example 3 | Example 4 | Example 5 | Example 6 | Example 7 |
|---|---|---|---|---|---|---|---|---|---|
| Liquid A | U-15 | (6) | 3.3 g | 3.3 g | 3.3 g | 3.3 g | 3.3 g | 3.3 g | 3.3 g |
| | Ethylcellosolve | (7) | 12.5 g | | 12.5 g | | 12.5 g | 12.5 g | |
| | 1-Methoxy-2-propanol | (7) | | 12.5 g | | 12.5 g | | | 12.5 g |
| | Water | (7) | 3.2 g | 0.2 g | 3.2 g | 0.2 g | 3.2 g | 3.2 g | 0.2 g |
| | Acetic acid | (5) | 1.5 g | 1.5 g | 1,5 g | 1.5 g | 1.5 g | 1.5 g | 1.5 g |
| | Tetramethoxysilane | (1) | 2 g | 2 g | | 2 g | 2 g | 2 g | |
| | M Silicate 51 | (1) | | | 1.5 g | | | | |
| | Methyltrimethoxysilane | (1) | | | | | | | 2 g |
| | 20% Methanol solution of p-toluenesulfonic acid | (5) | 0.1 g | 0.1 g | 0.1 g | 0.1 g | 0.1 g | 0.1 g | 0/1 g |
| Liquid B | Methyltrimethoxysilane | (1) | 2 g | 2 g | 2 g | | 2 g | 2 g | 2 g |
| | MTMS-A | (1) | | | | 1.5 g | | | |
| | 3-Glycydoxypropyltrimethoxysilane | (3) | 2.5 g | 2 g | 2.5 g | 2 g | | 0.4 g | 2 g |
| | Dimethoxyglycydoxypropylmethylsilance | (3) | | | | | 1.9 g | 1.5 g | |
| | Ethylcellosolve | (7) | 1 g | | 1 g | | 1 g | 1 g | |
| | 1-Methoxy-2-propanol | (7) | | 1 g | | 1 g | | | 1 g |
| | 3-Amonopropyltrimethoxysilane | (2) | 1.6 g | 0.8 g | 1.6 g | 0.8 g | 1.6 g | 1.6 g | 0.8 g |
| | ULS-1385MG | (4) | 0.7 g | 0.7 g | 0.7 g | 0.7 g | 0.7 g | 0.7 g | 0.7 g |
| | Total reduced weight of inorganic oxide in cured film (wt%) | | 58 | 61 | 58 | 61 | 57 | 58 | 58 |
| | Content of polymer UV absorber in solid matters (wt%) | | 4 | 5 | 4 | 5 | 4 | 4 | 5 |
| Evaluation | Stability of coating liquid | | Good | Good | Good | Good | Good | Good | Good |
| | Appearance of film | | Good | Good | Good | Good | Good | Good | Good |
| | Transmittance to visible rays of multilayer body | | 90% | 90% | 90% | 90% | 90% | 90% | 90% |
| | Haze of multilayer body | | 1% | 1% | 1% | 1% | 1% | 1% | 1% |
| | Scratch resistance | | 1 | 1 | 1 | 1 | 1 | 1 | 2 |
| | Adhesion | | 100/100 | 100/100 | 100/100 | 100/100 | 100/100 | 100/100 | 100/100 |
| | Resistance to organic chemicals | | Good | Good | Good | Good | Good | Good | Good |
| | Heat resistance | | 100/100 | 100/100 | 100/100 | 100/100 | 100/100 | 100/100 | 100/100 |
| | Resistance to thermal shock | | 100/100 | 100/100 | 100/100 | 100/100 | 100/100 | 100/100 | 100/100 |
| | Weatherability (1020 hours) | | 100/100 | 100/100 | 100/100 | 100/100 | 100/100 | 100/100 | 100/100 |
| | Weatherability (1440 hours) | | 100/100 | 100/100 | 100/100 | 100/100 | 100/100 | 100/100 | 100/100 |
| State | Dispersion state of nanoparticles | | Good | Good | Good | Good | Good | Good | Good |

**Table 2**

| | Component | | Example 8 | Example 9 | Example 10 | Example 11 | Example 12 | Example 13 | Example 14 |
|---|---|---|---|---|---|---|---|---|---|
| Liquid A | Snowstex 0-40 | (6) | 1.25 g | 1.25 g | 1.25 g | 1.25 g | 1.25 g | 1.25 g | 1.25 g |
| | U-15 | (6) | - | - | - | - | - | 2.6 g | 2.6 g |
| | Tetramethoxysilane | (1) | 2 g | | 2 g | 2 g | 2 g | 2 g | 2 g |
| | M Silicate 51 | (1) | | 2 g | | | | | |
| | 20% Metanol solution of p-toluenesulfonic acid | (5) | 0.1 g | 0.1 g | 0.1 g | 0.1 g | 0.1 g | 0.1 g | 0.1 g |
| | Acetic acid | (5) | 1.5 g | 1.5 g | 1.5 g | 1.5 g | 1.5 g | 1.5 g | 1.5 g |
| | 1-Methoxy-2-propanol | (7) | 12.5 g | 12.5 g | 12.5 g | 12.5 g | 12.5 g | 12.5 g | 12.5 g |
| | Water | (7) | 2.3 g | 2.3 g | 2.3 g | 2.3 g | 2.3 g | 2.3 g | 2.3 g |
| Liquid B | Methyltrimethoxysilane | (1) | 2 g | 2 g | 2 g | | 2 g | 2 g | 2 g |
| | MTMS-A | (1) | | | | 2 g | | | |
| | 3-Glycydoxypropyltrimethoxysilane | (3) | 0.4 g | 0.4 g | 0.4 g | 0.4 | 0.4 g | 0.4 g | 0.4 g |
| | Dimethoxyglycydoxypropylmethylsilane | (3) | 1.5 g | 1.5 g | 1.5 g | 1.5 g | 1.5 g | 1.5 g | 1.5 g |
| | 1-Methoxy-2-propanol | (7) | 1 g | 1 g | 1 g | 1 g | 1 g | 1 g | 1 g |
| | 3-Aminopropyltrimethoxysilane | (2) | 0.8 g | 0.8 g | 0.8 g | 0.8 g | 0.8 g | 0.8 g | 0.8 g |
| | ULS-1385MG | (4) | 0.7 g | 0.7 g | 1.4 g | 1.4 g | 2.8 g | 0.7 g | 1.4 g |
| | Total reduced weight of inorganic oxide in cured film (wt%) | | 59 | 59 | 57 | 56 | 51 | 63 | 59 |
| | Content of polymer ultraviolet absorber in solid matters (wt%) | | 5 | 5 | 9 | 9 | 17 | 4 | 8 |
| Evaluation | Stability of coating liquid | | Good | Good | Good | Good | Good | Good | Good |
| | Appearance of film | | Good | Good | Good | Good | Good | Good | Good |
| | Transmittance to visible rays of multilayer body | | 90% | 90% | 90% | 90% | 90% | 90% | 90% |
| | Haze of multilayer body | | 1% | 1% | 1% | 1% | 1% | 1% | 1% |
| | Scratch resistance | | 1 | 1 | 1 | 1 | 1 | 1 | 2 |
| | Adhesion | | 100/100 | 100/100 | 100/100 | 100/100 | 100/100 | 100/100 | 100/100 |
| | Resistance to organic chemicals | | 100/100 | 100/100 | 100/100 | 100/100 | 100/100 | 100/100 | 100/100 |
| | Heat resistance | | 100/100 | 100/100 | 100/100 | 100/100 | 100/100 | 100/100 | 100/100 |
| | Resistance to thermal shock | | 100/100 | 100/100 | 100/100 | 100/100 | 100/100 | 100/100 | 100/100 |
| | Weatherability (1020 hours) | | 100/100 | 100/100 | 100/100 | 100/100 | 100/100 | 100/100 | 100/100 |
| | Weatherability (1440 hours) | | - | - | - | - | - | 100/100 | - |
| State | Dispersion state of nanoparticles | | Good | Good | Good | Good | Good | Good | Good |

**Table 3**

| | Component | | Com. Example 1 | Com. Example 2 | Com. Example 3 | Com. Example 4 |
|---|---|---|---|---|---|---|
| Liquid A | U-15 | (6) | 3.3 g | | 3.3 g | 3.3 g |
| | Ethylcellosolve | (7) | | 12.5 g | | |
| | 1-Methoxy-2-propanol | (7) | 12.5 g | | 12.5 g | 12.5 g |
| | Water | (7) | 0.2 g | 3.2 g | 0.2 g | 0.2 g |
| | Acetic acid | (5) | 1.5 g | 1.5 g | 1.5 g | 1.5 g |
| | Tetramethoxysilane | (1) | 2 g | 2 g | 2 g | 2 g |
| | M Silicate 51 | (1) | | | | |
| | Methyltrimethoxysilane | (1) | | | | |
| | 20% Methanol solution of p-toluenesulfonic acid | (5) | 0.1 g | 0.1 g | 0.1 g | 0.1 g |
| Liquid B | Methyltrimethoxysilane | (1) | 2 g | 2 g | 2 g | 2 g |
| | MTMS-A | (1) | | | | |
| | 3-Glycydoxypropyltrimethoxysilane | (3) | 2 g | 2.5 g | 2 g | - |
| | Dimethoxyglycydoxypropylmethylsilane | (3) | | | | |
| | Ethylcellosolve | (7) | | 1 g | | |
| | 1-Methoxy-2-propanol | (7) | 1 g | | 1 g | 1 g |
| | 3-Aminopropyltrimethoxysilane | (2) | 0.8 g | 1.6 g | | 0.8 g |
| | ULS-1385MG | (4) | - | 0.7 g | 0.7 g | 0.7 g |
| | Total reduced weight of inorganic oxide in cured film (wt%) | | - | - | - | - |
| | Content of polymer ultraviolet absorber in solid matters (wt%) | | 0 | 4 | - | - |
| Evaluation | Stability of coating liquid | | Good | Good | Good | Good |
| | Appearance of film | | Good | Good | Good | Cracked |
| | Transmittance to visible rays of multilayer body | | 90% | 90% | 85% | Immeasurable |
| | Haze of multilayer body | | 1% | 1% | 15% | Immeasurable |
| | Scratch resistance | | 1 | 1 | 4 | Immeasurable |
| | Adhesion | | 100/100 | 100/100 | - | Immeasurable |
| | Resistance to organic chemicals | | Good | Good | - | Immeasurable |
| | Heat resistance | | | 100/100 | - | |
| | Resistance to thermal shock | | Cracked, Immeasurable | 100/100 | - | Immeasurable |
| | Weatherability (1020 hours) | | - | 100/100 | - | - |
| | Weatherability (1440 hours) | | - | 70/100 | - | - |
| State | Dispersion state nanoparticles | | Good | Good | Not good | Immeasurable |

**Table 4**

| | Component | | Com. Example 5 | Com. Example 6 | Com. Example 7 | Com. Example 8 |
|---|---|---|---|---|---|---|
| Liquid A | Snowtex O-40 | (6) | - | - | - | - |
| | U-15 | (6) | - | - | - | - |
| | Tetramethoxysilane | (1) | 2 g | 2 g | 2 g | 2 g |
| | M Silicate 51 | (1) | | | | |
| | 20% Methanol solution of p-toluenesulfonic acid | (5) | 0.1 g | 0.1 g | 0.1 g | 0.1 g |
| | Acetic acid | (5) | 1.5 g | 1.5 g | 1.5 g | 1.5 g |
| | 1-Methoxy-2-propanol | (7) | 12.5 g | 12.5 g | 8.5 g | 8.5 g |
| | Water | (7) | 2.3 g | 2.3 g | | |
| Liquid B | Methyltrimethoxysilane | (1) | 2 g | 2 g | 2 g | 2 g |
| | MTMS-A | (1) | | | | |
| | 3-Glycydoxypropyltrimethoxysilane | (3) | 0.4 g | 0.4 g | 0.4 g | - |
| | Dimethoxyglycidoxypropylmethylsilane | (3) | 1.5 g | 1.5 g | 1.5 g | |
| | 1-Methoxy-2-propanol | (7) | 1 g | 1 g | 1 g | 1 g |
| | 3-Aminopropyltrimethoxysilane | (2) | 0.8 g | 0.8 g | | 0,8 g |
| | ULS-1385MG | (4) | 0.7 g | | 0.7 g | 0.7 g |
| | Total reduced weight of inorganic oxide in cured film (wt%) | | - | - | - | - |
| | Content of polymer ultraviolet absorber in solid matters (wt%) | | 5 | - | - | - |
| Evaluation | Stability of coating liquid | | Good | Good | Good | Good |
| | Appearance of film | | Good | Good | Good | Cracked |
| | Transmittance to visible rays of multilayer body | | 90% | 90% | 86% | Immeasurable |
| | Haze of multilayer body | | 1% | 1% | 13% | Immeasurable |
| | Scratch resistance | | 2 | 2 | 4 | Immeasurable |
| | Adhesion | | 100/100 | 100/100 | - | Immeasurable |
| | Resistance to organic chemicals | | 100/100 | 100/100 | - | Immeasurable |
| | Heat resistance | | 100/100 | 100/100 | - | Immeasurable |
| | Resistance to thermal shock | | 100/100 | Cracked, Immeasurable | - | Immeasurable |
| | Weatherability (1020 hours) Weatherability (1440 hours) | | 100/100 | - | - | - |
| | | | 75/100 | - | - | - |
| State | Dispersion state nanoparticles | | Good | - | Not good | Immeasurable |

From Examples 1 to 14, it is understood that the first coating composition of the invention is excellent in storage stability. Further, the first cured film of the invention obtained by applying the first coating composition to a polycarbonate resin substrate, followed by curing, was free from cracking or spotting, and was improved in transparency, scratch resistance, adhesion to a resin substrate, and resistance to organic chemicals. It was confirmed that, after this cured film stands at 110°C for 720 hours, after it was exposed to low temperature environments and high temperature environments (-30°C to 110°C) alternatively (the cycle was repeated 100 times), or after it stands for a long period of time, adhesion to the resin substrate was not changed.

The cured films of Comparative Examples 1 and 6, which were formed by applying to a polycarbonate resin substrate a coating composition in which the polymer ultraviolet-absorbing particles (component (4)) was not mixed, followed by curing, were cracked when impact was applied many times at -30°C, proving they were poor in resistance to thermal shock.

The cured films of Comparative Examples 2 and 5, which were formed by applying to a polycarbonate resin substrate a coating composition in which the inorganic ultraviolet-absorbing particles and the colloidal silica (component (6)) were not mixed, followed by curing, were confirmed to have lowered adhesion when kept in Ci165 (manufactured by Atlas Corporation, Output 6.5 kW) for 1440 hours under the conditions of a black panel temperature of 63°C and a humidity of 50%.

The cured films of Comparative Examples 3 and 7, which were formed by applying to a polycarbonate resin substrate a coating composition in which the aminosilane compound (component (2)) was not mixed, followed by curing, were poor in haze or scratch resistance.

The cured films of Comparative Examples 4 and 8, which were formed by applying to a polycarbonate resin substrate a coating composition in which the epoxysilane compound (component (3)) was not mixed, followed by curing, cracked even immediately after the curing, and hence, transparency or adhesion could not be measured. In addition, due to poor film-forming properties (cracking), a sample for observing the cross-section of the cured film could not be prepared. Therefore, the average particle diameter of particles of the cured film could not be measured.

In the following Examples 15 to 22 and Comparative Examples 9 to 13, the components given below were used.

### Component (1'):

MTMS-A (trifunctional polyalkoxysilane compound) (manufactured by Tama Chemical, Co., LTD.)

### Component (5'):

ULS-383MG (ultraviolet-absorbing skeleton species: benzophenone-based)
ULS-1383MG (ultraviolet-absorbing skeleton species: benzotriazole-based)
ULS-1385MG (ultraviolet-absorbing skeleton species: benzotriazole-based)
All were manufacture by Ipposha Oil Industries Co., Ltd. (water dispersion/solid content: 30%)

### Polycarbonate substrate:

IV2200R (weatherability glade), manufactured by Idemitsu Kosan Co., Ltd. having a thickness of 3 mm (visible light transmittance: 90%, haze value: 1%)

### Example 15

A coating liquid was prepared by using the components in amounts shown in Table 5.
ULS-1385MG (component (5')), 1-methoxy-2-propanol (component (7')) and ion exchange water (component (7')) were placed in a 50 g-volume sample tube. While stirring at 700 rpm, acetic acid (component (6')), methyltrimethoxysilane (component (1')), dimethoxy-3-glycydoxypropylmethylsilane (component (3')) and a 20% methanol solution of p-toluenesulfonic acid (component (6')) were added dropwise to the mixture in this order. Each component was added for 1 minute. Then, the mixture was stirred for 60 minutes at room temperature and allowed to stand for one day. The resulting liquid is referred to as liquid A.
In a 20 g-volume sample tube, 3-isocyanatopropyltriethoxysilane and 2-butanoloxime (blocking agent of an isocyanate group) were placed, stirred at 500 rpm for 10 minutes and allowed to stand for one day. The resulting liquid is referred to as liquid B. Blocking of the isocyanate group was confirmed by ¹³C-NMR from the fact that the peak derived from the isocyanate group was disappeared. The total amount of 3-isocyanatopropyltriethoxysilane and 2-butanoneoxime was referred to as the amount of the blocked isocyanatosilane compound (4').

In a 200 ml-volume three-neck flask provided with a cooling tube, the liquid A and a stirrer were placed. Under the nitrogen stream, heating was conducted for 3 hours at 600 rpm at 80°C. Then, the liquid B was added, and heating was conducted at the same conditions and at 80°C for 4 hours.
Further, 3-aminopropyltrimethoxysilane (component (2')) was added dropwise for 2 minutes, followed by heating at 80°C for 6 hours. Subsequently, the mixture was allowed to stand for one week at 25°C in a dark place, whereby a coating composition was obtained. Liquid stability of the coating composition was evaluated. The evaluation results are shown in Table 5.

The coating liquid obtained as described above was applied by using a bar coater to the surface of a polycarbonate molded product with a thickness of 3 mm so that the resulting cured film had a thickness of 7 µm. The resultant was cured at 130°C for two hours in an oven under the nitrogen stream, whereby a transparent multilayer body having a cured film on its surface was obtained. The physical properties of the resulting multilayer body are shown in Table 5.

The resulting coating composition and the multilayer body were evaluated according to the following methods.

(15) SiO₂-reduced weight derived from Si compound in cured film
The ratio of the oxide is determined by subj ecting a sample obtained by thermally curing the coating liquid to thermogravimetric measurement on a petri dish made of Teflon (registered trademark) (under nitrogen, the temperature was raised at 20 °C/min. from room temperature to 800°C) and calculating the ratio of the oxide from the amount of a residue at 800°C.

(16) Abrasion resistance: Using a CS-10F wear ring and a Taber abrasion tester (rotary abrasion tester) (No. 430, manufactured by Toyo Seiki Co., Ltd), a Taber abrasion test was performed at a load of 500 g and a number of revolutions of 100. The difference (ΔH) between the haze before the Taber abrasion test and the haze after the Taber abrasion test was measured. A difference value of less than 10 was evaluated as good, a difference value of 10 (inclusive) to 15 (exclusive) was evaluated as not good, and a difference value of 15 or more was evaluated as poor. (Haze = Td/Tt × 100, Td: transmittance of scattered rays, Tt: transmittance of entire rays)
The difference in haze of the polycarbonate substrate used in Examples and Comparative examples was ΔH = 30.

### (17) Boiling resistance

A sample obtained by forming a cured film on a polycarbonate resin was immersed in boiling water in a stainless-made beaker for a predetermined period of time. After the immersion, changes in appearance, adhesion and film thickness were evaluated. The thickness was evaluated by means of an optical thickness meter FE-3000 manufactured by Otsuka Electronic,s Co., Ltd. A ratio of reduction in film thickness of less than 10% was evaluated as good, a ratio of reduction in film thickness of 10% (inclusive) to 15% (exclusive) was evaluated as not good and a ratio of reduction in film thickness of 15% or more was evaluated as poor.

### (18) Heat resistance

By using a heat resistance testing machine (PS-222, manufactured by Tabai Espec Corporation), measurement was performed at 80°C for 720 hours. The heat resistance was evaluated from the degree of change in adhesion before and after the test.

### (19) Average particle diameter of organic particles in the cured film

The cross-section of the thermally-cured film was observed by means of a TEM (transmission electron microscope), and 10 particles present in a 1 µm × 1 µm square were selected. By means of free software (NIH Image 1.63, manufactured by National Institute of Health, U.S.), the average particle diameter was obtained.
An average particle diameter of 200 nm or less was evaluated as good, an average particle diameter exceeding 200 nm was evaluated as poor, and a state in which, although particles with a particle diameter of 200 nm or less are present, amoeba-like fused particles with a diameter exceeding 200 nm are also present, is evaluated as not good.
The average particle diameter was 40 to 60 nm in Examples 15 to 22 was 40 to 60 nm, and the particles were in the dispersion state.

As for the evaluation method in the examples of the second aspect, the methods for evaluating the liquid stability, the film appearance, the visible light transmittance and the haze, the volume fraction of the organic particles in the cured film, the adhesion, the weatherability and the resistance to thermal shock are the same as those in the examples of the first aspect.
In the above-mentioned evaluation methods, "film appearance", "volume fraction of organic particles in a cured film" and "adhesion" are expressed as "appearance of a cured film", "volume fraction of organic particles in a cured film" and "adhesion between a cured film and a resin substrate", respectively, in the examples of the first aspect.

### Comparative Example 9

Using the components in amounts shown in Table 6, a coating composition and a multilayer body were prepared and evaluated in the same manner as in Example 15, except that heating was conducted at 80°C for 30 minutes after the addition of 3-aminopropyltrimethoxysilane (component (2')). The results of the evaluation are shown in Table 6.

### Example 16 and Example 17

Using the components in amounts shown in Table 5, a coating composition and a multilayer body were prepared and evaluated in the same manner as in Example 15, except that heating was conducted at 65°C for 4 hours after the addition of the liquid B to the liquid A and heating was conducted at 65°C for 6 hours after the addition of 3-aminopropyltrimethoxysilane (component (2)) to the mixture of the liquid A and the liquid A. The evaluation results are shown in Table 5.

### Examples 18 to 22 and Comparative Examples 10 to 12

Using the components in amounts shown in Table 5 or Table 6, a coating composition and a multilayer body were prepared and evaluated in the same manner as in Example 15. The evaluation results are shown in Table 5 or Table 6.
The volume fraction of the organic particles in the cured film prepared in Example 20 was 23 vol%.

**Table 5**

| | Component | Component | Ex. 15 | Ex. 16 | Ex. 17 | Ex. 18 | Ex.19 | Ex. 20 | Ex. 21 | Ex. 22 |
|---|---|---|---|---|---|---|---|---|---|---|
| Liquid A | ULS-1385MG | (5') | 2.0 g | 2.0 g | 2.0 g | | | 2.8 g | 2.8 g | 4.2 g |
| | ULS-1383MG | (5') | | | | 2.0 g | | | | |
| | ULS-383MG | (5') | | | | | 2.0 g | | | |
| | 1-Methoxy-2-propanol | (7') | 8.5 g | 8.5 g | 8.5 | 8.5 g | 8.5 g | 8.5 g | 8.5 g | 8.5 g |
| | Water | (7') | 3.0 g | 2.0 g | 2.0 g | 3.0 g | 3.0 g | 2.0 g | 2.0 g | 1.0 g |
| | Acetic acid | (6') | 1.0 g | 1.0 g | 1.0 g | 1.0 g | 1.0 g | 1.0 g | 1.0g | 1.0 g |
| | Methyltrimethoxysilane | (1') | 4.0 g | 4.0 g | 4.0 g | 4.0 g | 4.0 g | 4.0 g | | 4.0 g |
| | MTMS-A | (1') | | | | | | | 3.0 g | |
| | Dimethoxy-3-glycydoxypropylmethylsilane | (3') | 1.9 g | 1.9 g | 1.9 g | 1.9 g | 1.9 g | 1.9 g | 1.9 g | 1.9 g |
| | 20% Methanol solution of p-toluenesulfonic acid | (6') | 0.1 g | 0.1 g | 0.1 g | 0.1 g | | 0.1 g | 0.1 g | 0.1 g |
| | Nitric acid | (6') | | | | | 0.3 g | | | |
| Liquid B | Isocyanatopropyltriethoxysilane | (4') | 2.2 g | 2.2 g | 2.2 g | 2.2 g | 2.2 g | 2.2 g | 2.2 g | 2.2 g |
| | 2-Butanoneoxime (blocking agent for isocyanate group) | (4') | 0.7 g | | | 0.7 g | 0.7 g | 0.7 g | 0.7 g | 0.7 g |
| | 3,5-Dimethylpyrazole (ditto) | (4') | | 0.8 g | | | | | | |
| | 1,2,4-Triazole (ditto) | (4') | | | 0.6 g | | | | | |
| Liquid C | 3-Aminopropyltrimethoxysilane | (2') | 0.8 g | 0.8 | 0.8 g | | 0.8 g | 0.8 g | 0.8 g | 0.8 g |
| | N-2(Aminoethyl)-3-aminopropyltriethoxysilane | (2') | | | | 0.7 g | | | | |
| Evaluation | SiO₂-reduced weight (wt%) | | 40 | 40 | 41 | 40 | 40 | 39 | 39 | 37 |
| | Content of polymer ultraviolet absorber (wt%: calculated value) | | 9 | 9 | 9 | 9 | 9 | 13 | 13 | 18 |
| | Liquid stability | | Good | Good | Good | Good | Good | Good | Good | Good |
| | Film appearance | | Good | Good | Good | Good | Good | Good | Good | Good |
| | Transmittance to visible rays | | 90% | 90% | 90% | 90% | 90% | 90% | 90% | 90% |
| | Haze | | 1% | 1% | 1% | 1% | 1% | 1% | 1% | 1% |
| | Abrasion resistance | | Good | Good | Good | Good | Good | Good | Good | Good |
| | Adhesion | | 100/100 | 100/100 | 100/100 | 100/100 | 100/100 | 100/100 | 100/100 | 100/100 |
| | Film appearance after 1-hour boiling | | Good | Good | Good | Good | Good | Good | Good | Good |
| | Film thickness after 1-hour boiling | | Good | Good | Good | Good | Good | Good | Good | Good |
| | Adhesion after 1-hour boiling | | 100/100 | 100/100 | 100/100 | 100/100 | 100/100 | 100/100 | 100/100 | 100/100 |
| | Adhesion after 3-hour boiling | | 100/100 | 100/100 | 100/100 | 100/100 | 100/100 | 100/100 | 100/100 | 100/100 |
| | weatherability (600 hours) | | 100/100 | 100/100 | 100/100 | 100/100 | 100/100 | 100/100 | 100/100 | 100/100 |
| | Resistance to thermal shock | | 100/100 | 100/100 | 100/100 | 100/100 | 100/100 | 100/100 | 100/100 | 100/100 |
| | Heat resistance | | 100/100 | 100/100 | 100/100 | 100/100 | 100/100 | 100/100 | 100/100 | 100/100 |
| | Dispersion state of organic particles | | Good | Good | Good | Good | Good | Good | Good | Good |

**Table 6**

| | Component | Component | Com. Ex. 9 | Com. Ex. 10 | Com. Ex. 11 | Com. Ex. 12 | Com. Ex. 13 |
|---|---|---|---|---|---|---|---|
| Liquid A | ULS-1385MG | (5') | 2.8 g | 2.0 g | 2.8 g | | 2.8 g |
| | ULS-1383MG | (5') | | | | | |
| | ULS-383MG | (5') | | | | | |
| | 1-Methgxy-2-propanol | (7') | 8.5 g | 8.5 g | 8.5 g | 8.5 g | 8.5 g |
| | Water | (7') | 2.0 g | 2.0 g | 2.0 g | 4.0 g | 2.0 g |
| | Acetic acid | (6') | 1.0 g | 1.0 g | 1.0 g | 1.0 g | 1.0 g |
| | Methyltrimethoxysilane | (1') | 4.0 g | 4.0 g | 4.0 g | 4.0 g | 4.0 g |
| | MTMS-A | (1') | | | | | |
| | Dimethoxy-3-glycydoxypropylmethylsilane | (3') | 1.9 g | 1.9 g | | 1.9 g | 1.9 g |
| | 20% Methanol solution of p-toluenesulfonic acid | (6') | 0.1 g | 0.1 g | 0.1 g | 0.1 g | 0.1 g |
| Liquid B | Isocyanatopropyltriethoxysilane | (4') | | 2.2 g | 2.2 g | 2.2 g | 2.2 g |
| | 2-Butanoneoxime (blocking agent for an isocyanate group) | (4') | | 0.7 g | 0.7 g | 0.7 g | |
| | 3,5-Dimethylpyrazole (ditto) | (4') | | | | | |
| | 1,2,4-Triazole (ditto) | (4') | | | | | |
| Liquid C | 3-Aminopropyltrimethoxysilane | (2') | 0.8 g | | 0.8 g | 0.8 g | 0.8 g |
| Evaluation | SiO₂-reduced weight (wt%) | | 45 | 40 | 43 | 44 | 43 |
| | Content of polymer ultraviolet absorber (wt%) | | 18 | 10 | 16 | 0 | 14 |
| | Liquid stability. | | Good | Good | Good | Good | Good |
| | Film appearance | | Good | Good | Cracked | Good | Good |
| | Transmittance to visible rays | | 90% | 87% | Hard to measure | 90% | 90% |
| | Haze | | 1% | 12% | Hard to measure | 1% | 1% |
| | Abrasion resistance | | Good | Poor | Immeasurable | Good | Poor |
| | Adhesion | | 100/100 | 0/100 | 100/100 | 100/100 | 20/100 |
| | Appearance after 1-hour boiling | | Good | - | - | Good | 0/100 |
| | Thickness after 1-hour boiling | | Good | Poor | - | Good | Poor |
| | Adhesion after 1-hour boiling | | 50/100 | 0/100 | - | 100/100 | 0/100 |
| | Adhesion after 3-hour boiling | | 0/100 | - | - | 80/100 | - |
| | Weatherability (600 hours) | | 100/100 | - | - | 0/100 | - |
| | Resistance to thermal shock | | 100/100 | - | - | Cracked | - |
| | Heat resistance | | 100/100 | - | - | - | 100/100 |
| | Dispersion state of organic particles | | Good | Not good | Hard to measure | - | Good |

The details of the materials indicated by the product name in Examples 23 to 30 and Comparative Examples 14 and 15 are given as follows.

### Component (1")

MTMS-A (trifunctional polyalkoxysilane compound) (manufactured by Tama Chemical Co., Ltd.)

### Component (5")

ULS-1385MG (ultraviolet-absorbing skeleton species: benzotriazole-based), manufactured by Ipposha Oil Industries Co., Ltd) (water dispersion/solid content of 30 wt%)

### Component (6")

Needral U-15 (inorganic ultraviolet-absorbing particles), manufactured by Taki Chemical Co., Ltd.) (water dispersion, cerium oxide concentration of 15 wt%, particle diameter of 8 nm or less (from the analysis sheet prepared by the manufacturer)
Snowtex O (colloidal silica), manufactured by Nissan Chemical Industries, Ltd. (water dispersion, colloidal silica concentration of 20 wt%, particle diameter of 10 to 20 nm (the value published by the manufacturer)
Snowtex N (colloidal silica), manufactured by Nissan Chemical Industries, Ltd. (water dispersion, colloidal silica concentration of 20 wt%, particle diameter of 10 to 20 nm (the value published by the manufacturer)
Snowtex O-40 (colloidal silica), manufactured by Nissan Chemical Industries, Ltd. (water dispersion, colloidal silica concentration of 40 wt%, particle diameter of 20 to 30 nm (the value published by the manufacturer)

### Polycarbonate substrate

IV2200R (weatherability grade), manufactured by Idemitsu Kosan Co., Ltd. having a thickness of 3 mm (visible light transmittance: 90%, haze value: 1%)

### Example 23

A coating liquid was prepared using the components in amounts shown in Table 7.
ULS-1385MG (component (5")), 1-methoxy-2-propanol (component (8") and ion exchange water (component (8")) were placed in a 50 g-volume sample tube. While stirring at 700 rpm, acetic acid (component (7")), methyltrimethoxysilane (component (1")), dimethoxy-3-glycydoxypropylmethylsilane (component (3")) and a 20% methanol solution of p-toluenesulfonic acid (component (7")) were added dropwise to the mixture in this order. Each component was added for 1 minute. Then, the mixture was stirred for 60 minutes at room temperature and allowed to stand for one day. The resulting liquid is referred to as liquid A.
In a 20 g-volume sample tube, 3-isocyanatopropyltriethoxysilane and 2-butanoloxime (blocking agent of an isocyanate group) were placed, stirred at 500 rpm for 10 minutes, and allowed to stand for one day. The resulting liquid is referred to as liquid B. Blocking of the isocyanate group was confirmed by using ¹³C-NMR from the fact that the peak derived from the isocyanate group was disappeared. The total amount of 3-isocyanatopropyltriethoxysilane and 2-butanoneoxime was referred to as the amount of the blocked isocyanatosilane compound (4").

In a 200 ml-volume three-neck flask provided with a cooling tube, the liquid A and a stirrer were placed. Under the nitrogen stream, heating was conducted for 3 hours at 600 rpm at 80°C. Then, the liquid B was added, and heating was conducted at the same condition and at 80°C for 4 hours.
Further, 3-aminopropyltrimethoxysilane (component (2") was added dropwise for 2 minutes, followed by heating at 80°C for 6 hours.
Subsequently, the mixture was allowed to stand for one day at 25°C in a dark place. While stirring at 650 rpm, Snowtex O (component (6")) was added dropwise for 2 minutes. The mixture was stirred for 30 minutes at room temperature, and heated at 80°C for 30 minutes.
Subsequently, the mixture was allowed to stand for one week, whereby a coating composition was obtained. For the resulting coating composition, liquid stability was evaluated. The evaluation results are shown in Table 7.

The coating composition obtained above was applied using a bar coater to the surface of a polycarbonate resin with a thickness of 3 mm so that the resulting cured film has a thickness of 7 µm. The liquid was cured at 130°C for two hours in an oven under the nitrogen stream, whereby a transparent multilayer body having a cured film on its surface was obtained. For the resulting multilayer body, the physical properties were evaluated. The results of evaluation are shown in Table 7.

The TEM (transmission electron microscope) photograph of the cured film obtained in Example 23 is shown in FIG. 3.
In this photograph, the black dots indicate colloidal silica, the gray dots indicate polymer particles, and the remaining gray part indicates a matrix having an Si-O bond.
The presence of the matrix was confirmed by an Si-O contraction oscillation peak observed at 1000 to 1200 cm⁻¹ in the total reflection measurement method (ATE method using FTIR), and by the elemental analysis at the time of analysis of cross sectional structure by TEM.

The resulting coating composition and the multilayer body were evaluated by the following method.

### (20) Oxide-reduced weight of the inorganic components derived from the Si compounds and the inorganic ultraviolet absorber in the cured film

The oxide-reduced weight of the inorganic components was determined by subj ecting a sample, obtained by thermally curing the coating liquid (registered trademark), to thermogravimetric measurement on a petri dish made of Teflon (registered trademark) (under nitrogen, the temperature was raised at 20 °C/min. from room temperature to 800°C) and measuring the amount of a residue at 800°C.

### (21) Abrasion resistance: Using a CS-10F wear ring and a Taber abrasion tester (rotary abrasion tester) (No. 430, manufactured by Toyo Seiki Co., Ltd), a Taber abrasion test was performed at a load of 500 g and a number of revolutions of 100. The difference (ΔH) between the haze values before and after the Taber abrasion test was measured. A difference of less than 5 was evaluated as excellent, a difference of 5 (inclusive) to 10 (exclusive) was evaluated as good, a difference of 10 (inclusive) to 15 (exclusive) was evaluated as not good, and a difference of 15 or more was evaluated as poor. (Haze=Td/Tt × 100, Td: transmittance of scattered rays, Tt: transmittance of entire rays)

The difference in haze of the polycarbonate substrate used in Examples and Comparative examples was ΔH = 30.

### (22) Flexibility

A multilayer body was prepared in the same manner as in Example 23, except that a polycarbonate standard plate with a dimension of 100 mm × 50 mm (width) × 1 mm (thickness) (ECK100 manufactured by Tsutsunaka Plastic Industry Co., Ltd.) was used as a substrate.
The both ends of this multilayer body were held by fingers, and the multilayer body was subjected to forced bending (with a curve of a radius of 50 mm) 10 times. A multilayer body which did not crack was evaluated as good and a multilayer body which cracked was evaluated as poor.

As for the evaluation method in the examples of the third aspect, the methods for evaluating the liquid stability, the film appearance, the visible light transmittance and the haze, the volume fraction of the organic particles in the cured film, the adhesion, the weatherability, heat resistance and the average particle diameter of the inorganic ultraviolet-absorbing particles and colloidal silica in the cured film (in the solid matter) are the same as those in the examples of the first aspect.
In the above-mentioned evaluation methods, "film appearance", "volume fraction of organic particles in the cured film" and "adhesion" are expressed as "appearance of a cured film,", "volume fraction of organic particles in a cured film" and "adhesion between a cured film and a resin substrate", respectively, in the examples of the first aspect.
Further, as for the evaluation method in the examples of the third aspect, the method for evaluating the boiling resistance, the resistance to thermal shock and the average particle diameter of organic particles in the cured film are the same as those in the examples of the second aspect.

The volume fraction of the organic particles in the cured film prepared in Example 23 was 15 vol%. The organic particles in the cured film in Examples 23 to 29 had an average particle diameter of 40 to 60 nm, and the particles formed a dispersion structure. The inorganic ultraviolet-absorbing particles and the colloidal silica in the cured film in Examples 23 to 29 had an average particle diameter of 5 to 10 nm and 20 to 25 nm, respectively, and the particles formed a dispersion structure.

### Examples 24 to 30 and Comparative Examples 14 and 15

A composition and a multilayer body were prepared and evaluated in the same manner as in Example 23 and in accordance with the composition and the amount shown in Tables 7 and 8. The evaluation results are shown in Table 9 or Table 10.

**Table 7**

| | Component | Component | Example 23 | Example 24 | Example 25 | Example 26 | Example 27 | Example 28 | Example 29 |
|---|---|---|---|---|---|---|---|---|---|
| Liquid A | ULS-1385M (solid content 30%) | (5") | 2.8 g | 2.8 g | 2.8 g | 2.8 g | 8.4 g | 1.4 g | 1.4 g |
| | 1-Methoxy-2-propanol | (8") | 8.5 g | 8.5 g | 8.5 g | 8.5 g | 8.5 g | 8.5 g | 8.5 g |
| | Water | (8") | 1.0 g | 1.0 g | 1.0 g | 1.0 g | 1.0 g | 1.0 g | 1.0 g |
| | Acetic acid | (7") | 1.0 g | 1.0 g | 1.0 g | 1.0 g | 1.0 g | 1.0 g | 1.0 g |
| | Methyltrimethoxysilane | (1") | 4.0 g | | | | 4.0 g | 4.0 g | 4.0 g |
| | MTMS-A | (1") | | 3.0 g | 3.0 g | 3.0 g | | | |
| | Dimethoxy-3-glycydoxypropylmethylsilane | (3") | 1.9 g | 1.9 g | 1.9 g | 1.9 g | 1.9 g | 1.9 g | 1.9 g |
| | 20% Methanol solution of p-toluenesulfonic acid | (7") | 0.1 g | 0.1 g | 0.1 g | 0.1 g | 0.1 g | 0.1 g | 0.1 g |
| Liquid B | Isocyanatopropyltriethoxysilane | (4") | 2.2 g | 2.2 g | 2.2 g | 2.2 g | 2.2 g | 2.2 g | 2.2 g |
| | 2-Butanoneoxime (blocking agent for isocyanate group) | (4") | 0.7 g | 0.7 g | 0.7 g | 0.7 g | 0.7 g | 0.7 g | 0.7 g |
| Liquid C | 3-Amonopropyltrimethoxysilane | (2") | 0.8 g | 0.8 g | | | 0.8 g | 0.8 g | 0.8 g |
| | N-2(Aminoethyl)-3-aminopropyltriethoxysilane | (2") | | | 0.7 g | 0.7 g | | | |
| Liquid D | Snowtex O (Solid content: 20%) | (6") | 13.8 g | 13.8 g | 13.8 g | | | | 6.9 g |
| | Snowtex N (Solid content: 20%) | (6") | | | | 13.8 g | | | |
| | Snowtex 0-40 (Solid content: 40%) | (6") | | | | | 9.0 g | | |
| | Needral U-15 (Solid content: 15%) | (6") | | | | | | 4.8 g | 2.0 g |

**Table 8**

| | Component | Component | Example 30 | Comparative Example 14 | Comparative Example 15 |
|---|---|---|---|---|---|
| Liquid A | ULS-1385MG (solid content 30%) | (5"), (5') | 1.4 g | | |
| | 1-Methoxy-2-propanol | (8"), (7') | 8.5 g | 8.5 g | 8.5 g |
| | Water | (8"), (7') | 1.0 g | 1.0 g | 1.0 g |
| | Acetic acid | (7"), (6') | 1.0 g | 1.0 g | 1.0 g |
| | Methyltrimethoxysilane | (1"), (1') | 4.0 g | 4.0 g | 4.0 g |
| | MTMS-A | (1"), (1') | | | |
| | Dimethoxy-3-glycydoxypropylmethylsilane | (3"), (3') | 1.9 g | 1.9 g | 1.9 g |
| | 20% Methanol solution of p-toluenesulfonic acid | (7"), (6') | 0.1 g | 0.1 g | 0.1 g |
| Liquid B | Isocyanatopropyltriethoxysilane | (4"), (4') | 2.2 g | 2.2 g | 2.2 g |
| | 2-Butanoneoxime (blocking agent for isocyanate group) | (4"), (4') | 0.7 g | 0.7 g | 0.7 g |
| Liquid C | 3-Aminopropyltrimethoxysilane | (2"), (2') | 0.8 g | 0.8 g | 0.8 g |
| | N-2(Aminoethyl)-3-aminopropyltriethoxysilane | (2"), (2') | | | |
| Liquid D | Snowtex O (Solid content: 20%). | (6") | | | 13.8 g |
| | Needral U-15 (Solid content: 15%) | (6") | | 4.8 g | |

**Table 9**

| Evaluation item | Example 23 | Example 24 | Example 25 | Example 26 | Example 27 | Example 28 | Example 29 |
|---|---|---|---|---|---|---|---|
| Oxide-reduced weight derived from inorganic components (wt%) | 57 | 57 | 57 | 57 | 52 | 49 | 53 |
| Content of polymer UV absorber (wt%: calculated value) | 9 | 9 | 9 | 9 | 21 | 6 | 5 |
| Liquid stability | Good | Good | Good | Good | Good | Good | Good |
| Film appearance | Good | Good | Good | Good | Good | Good | Good |
| Transmittance to visible rays | 90% | 90% | 90% | 90% | 90% | 90% | 90% |
| Haze | 1% | 1% | 1% | 1% | 1% | 1% | 1% |
| Abrasion resistance | Excellent | Excellent | Excellent | Excellent | Good | Good | Excellent |
| Adhesion | 100/100 | 100/100 | 100/100 | 100/100 | 100/100 | 100/100 | 100/100 |
| Appearance after 1-hour boiling | Good | Good | Good | Good | Good | Good | Good |
| Film thickness after 1-hour boiling | Good | Good | Good | Good | Good | Good | Good |
| Adhesion after 1-hour boiling | 100/100 | 100/100 | 100/100 | 100/100 | 100/100 | 100/100 | 100/100 |
| Adhesion after 3-hour boiling | 100/100 | 100/100 | 100/100 | 100/100 | 100/100 | 100/100 | 100/100 |
| Weatherability (1440 hours) | 100/100 | 100/100 | 100/100 | 100/100 | 100/100 | 100/100 | 100/100 |
| Weatherability (1800 hours) | 100/100 | 100/100 | 100/100 | 100/100 | 100/100 | 100/100 | 100/100 |
| Resistance to thermal shock | 100/100 | 100/100 | 100/100 | 100/100 | 100/100 | 100/100 | 100/100 |
| Flexibility | Good | Good | Good | Good | Good | Good | Good |
| Heat resistance | 100/100 | 100/100 | 100/100 | 100/100 | 100/100 | 100/100 | 100/100 |
| Dispersion state of organic particles | Good | Good | Good | Good | Good | Good | Good |
| Dispersion state of inorganic particles | Good | Good | Good | Good | Good | Good | Good |

**Table 10**

| Evaluation item | Example 30 | Comparative Example 14 | Comparative Example 15 |
|---|---|---|---|
| Oxide-reduced weight derived from inorganic components (wt%) | 42 | 50 | 61 |
| Content of polymer UV absorber (wt%: calculated value) | 6 | 0 | 0 |
| Liquid stability | Good | Good | Good |
| Film appearance | Good | Good | Cracked |
| Transmittance to visible rays | 90% | 90% | Unmeasurable |
| Haze | 1% | 1% | Unmeasurable |
| Abrasion resistance | Good | Good | Unmeasurable |
| Adhesion | 100/100 | 100/100 | 100/100 |
| Appearance after 1-hour boiling | Good | Cracked | - |
| Film thickness after 1-hour boiling | Good | - | - |
| Adhesion after 1-hour boiling | 100/100 | - | - |
| Adhesion after 3-hour boiling | 100/100 | - | - |
| Weatherability (1440 hours) | 100/100 | Cracked, unmeasurable | - |
| Weatherability (1800 hours) | 80/100 | - | - |
| Resistance to thermal shock | 100/100 | Cracked, unmeasurable | - |
| Flexibility | Good | Poor | - |
| Heat resistance | 100/100 | - | - |
| Dispersion state of organic particles | Good | - | - |
| Dispersion state of inorganic particles | | Good | Good |

### INDUSTRIAL APPLICABILITY

The invention can be applied to a variety of resin materials, in particular, polycarbonate materials, including automotive interior parts such as meter covers, windshields for bicycles or tricycles, resin-made vehicle windows (various vehicle windows), resin-made windows of buildings, roofs for construction equipment, road light-transmitting board (sound insulating board), lens for eyeglasses such as eyeglasses for correction, sunglasses, eyeglasses for sports and protection glasses, optical discs, displays, components of portable phones, illumination components such as street lighting, windshields and protection shields. The invention can also be used preferably as a glass-replacing element.

## Claims

1. A cured film comprising:
organic ultraviolet-absorbing particles having an average particle diameter of 1 to 200 nm; and
inorganic ultraviolet-absorbing particles and/or colloidal silica having an average particle diameter of 1 to 200 nm;
the particles being dispersed in a matrix having an Si-O bond.

2. The cured film according to claim 1 wherein the volume fraction of the organic ultraviolet-absorbing particles in the cured film is 0.5 to 70 vol%.

3. The cured film according to claim 1 or 2 wherein the total reduced weight of an inorganic oxide contained in the cured film is 30 to 80 wt% of the total weight of the cured film.

4. A coating composition comprising the following components (1) to (7):
(1) an alkoxysilane compound or a polyalkoxysilane compound;
(2) an aminosilane compound;
(3) an epoxysilane compound;
(4) polymer ultraviolet absorber particles;
(5) a curing catalyst;
(6) inorganic ultraviolet-absorbing particles and/or colloidal silica; and
(7) a solvent

5. The coating composition according to claim 4 wherein the amounts of the components (1) to (7) are in the following ranges:
Component (1): 10 to 90 wt%
Component (2): 1 to 55 wt%
Component (3): 1 to 60 wt%
Component (4): 0.1 to 65 wt%
Component (5): 0.1 to 30 wt%
Component (6):
0.1 to 50 wt% if the component (6) is only the inorganic ultraviolet-absorbing particles;
0.1 to 80 wt% if the component (6) is only the colloidal silica; and
0.1 to 50 wt% of the inorganic ultraviolet-absorbing particles and 0.1 to 80 wt% of the colloidal silica if the component (6) is the inorganic ultraviolet-absorbing particles and the colloidal silica
Component (7): 10 to 1000 parts by weight for 100 parts by weight of the total amount of the components (1) to (6).

6. The coating composition according to claim 4 or 5 wherein the curing catalyst is an organic acid.

7. A cured film obtained by curing the coating composition according to any one of claims 4 to 6.

8. A resin multilayer body obtained by forming on a resin substrate the cured film according to any one of claims 1 to 3 and claim 7.

9. The multilayer body according to claim 8 which has a haze of 10% or less.

10. The multilayer body according to claim 9 which has a visible light transmittance of 80% or more.

11. A method for producing a coating composition comprising mixing the following components (1) to (7):
(1) an alkoxysilane compound or a polyalkoxysilane compound;
(2) an aminosilane compound;
(3) an epoxysilane compound;
(4) polymer ultraviolet absorber particles;
(5) a curing catalyst;
(6) inorganic ultraviolet-absorbing particles and/or colloidal silica; and
(7) a solvent.

12. The method for producing a coating composition according to claim 11 wherein
a mixed solution containing at least the components (1) and (6) is prepared; and
the component (4) is finally mixed.

13. The method for producing a cured film comprising curing the coating composition according to any one of claims 4 to 6 by heating.

14. A cured film comprising organic particles containing an ultraviolet-absorbing group and having an average particle size of 1 to 200 nm, the particles being dispersed in a matrix having an Si-O bond,
the film having a visible light transmittance of 80% or more, a haze value of 10% or less and boiling resistance.

15. The cured film according to claim 14 wherein the volume fraction of the organic particles in the cured film is 0.5 to 70 vol%.

16. The cured film according to claim 14 or 15 wherein the SiO₂-reduced weight of Si-derived components contained in the cured film is 30 to 80 wt% of the total weight of the cured film.

17. A coating composition comprising the following components (1') to (7'):
(1') an organoalkoxysilane compound or a polyorganoalkoxysilane compound;
(2') an aminosilane compound;
(3') an epoxysilane compound;
(4') a blocked isocyanatosilane compound
(5') a polymer ultraviolet absorber;
(6') a curing catalyst; and
(7') a solvent.

18. A coating composition according to claim 17 wherein the amounts of the components (1') to (7') are in the following ranges:
the organoalkoxysilane compound or the polyorganoalkoxysilane compound (1'): 10 to 80 wt%;
the aminosilane compound (2'): 1 to 60 wt%;
the epoxysilane compound (3'): 1 to 60 wt%;
the blocked isocyanatosilane compound (4') : 1 to 60 wt%;
the polymer ultraviolet absorber (5'): 0.1 to 50 wt%;
the curing catalyst (6'): 0.1 to 40 wt%; and
the solvent (7') : 5 to 1000 parts by weight for 100 parts by weight of the total amount of the components (1') to (6').

19. The coating composition according to claim 17 or 18 wherein the blocking agent of the blocked isocyanatosilane compound is oxime compound, lactam, alkylphenol, dialkylphenol, trialkylphenol, malonic acid diester, acetylacetone, active methylene compound, alcohol, hydroxyl group-containing ether, hydroxyl group-containing ester, mercaptan, acid amide, imidazole, pyrazol, triazole or acid imide.

20. The coating composition according to any one of claims 17 to 19 wherein the isocyanate compound of the blocked isocyanate compound is a γ-isocyanatopropyltrimethoxysilane, γ-isocyanatopropyltriethoxysilane or an isocyanatosilane compound.

21. The coating composition according to claim 17 or 18 wherein the cured catalyst is an organic acid.

22. A cured film obtained by curing the coating composition according to any one of claims 17 to 21.

23. A resin multilayer body obtained by forming on a resin substrate the cured film according to any one of claims 14 to 16 and claim 22.

24. A method for producing a coating composition comprising mixing the following components (1') to (7'):
(1') an organoalkoxysilane compound or a polyorganoalkoxysilane compound;
(2') an aminosilane compound;
(3') an epoxysilane compound;
(4') a blocked isocyanatosilane compound;
(5') a polymer ultraviolet absorber;
(6') a curing catalyst; and
(7') a solvent.

25. The method for producing a coating composition according to claim 24 wherein
a first mixed solution containing at least the components (1') and (4') is prepared; and
the component (2') is finally mixed.

26. A method for producing a cured film comprising curing the coating composition according to any one of claims 17 to 21 by heating.

27. A cured film comprising
organic particles having an ultraviolet-absorbing group and an average particle diameter of 1 to 200 nm and
inorganic ultraviolet-absorbing particles and/or colloidal silica having an average diameter of 1 to 200 nm,
the particles being dispersed in a matrix having an Si-O bond,
the film having a visible light transmittance of 80% or more, a haze value of 10% or less and boiling resistance.

28. The cured film according to claim 27 wherein the volume fraction of the organic particles in the cured film is 0.5 to 70 vol%.

29. The cured film according to claim 27 or 28 wherein the oxide-reduced weight of inorganic components contained in the cured film is 30 to 80 wt% of the total weight of the cured film.

30. A coating composition comprising the following components (1") to (8"):
(1") an organoalkoxysilane compound or a polyorganoalkoxysilane compound;
(2") an aminosilane compound;
(3") an epoxysilane compound;
(4") a blocked isocyanatosilane compound
(5") a polymer ultraviolet absorber;
(6") inorganic ultraviolet-absorbing particles and/or colloidal silica;
(7") a curing catalyst; and
(8") a solvent.

31. A coating composition according to claim 30 wherein the amounts of the components (1") to (8") are in the following ranges:
the organoalkoxysilane compound or the polyorganoalkoxysilane compound (1"): 10 to 80 wt%;
the aminosilane compound (2"): 1 to 60 wt%;
the epoxysilane compound (3"): 1 to 60 wt%;
the blocked isocynatosilance compound (4"): 1 to 60 wt%;
the polymer ultraviolet absorber (5"): 0.1 to 50 wt%;
the inorganic ultraviolet-absorbing particles and/or colloidal silica (6")
0.1 to 50 wt% if the component (6") is only the inorganic ultraviolet-absorbing particles;
0.1 to 80 wt% if the component (6") is only the colloidal silica; and
0.1 to 50 wt% of the inorganic ultraviolet-absorbing particles and 0.1 to 80 wt% of the colloidal silica if the component (6") is the inorganic ultraviolet-absorbing particles and the colloidal silica
the curing catalyst (7"): 0.1 to 40 wt%; and
the solvent (8"): 5 to 1000 parts by weight for 100 parts by weight of the total amount of the components (1") to (7").

32. The coating composition according to claim 30 or 31 wherein the curing catalyst is an organic acid.

33. A cured film obtained by curing the coating composition according to any one of claims 30 to 32.

34. A multilayer body obtained by forming on a resin substrate a cured film according to any one of claims 27 to 29 and claim 33.

35. A method for producing a coating composition comprising mixing the following components (1") to (8"):
(1") an organoalkoxysilane compound or a polyorganoalkoxysilane compound;
(2") an aminosilane compound;
(3") an epoxysilane compound;
(4") a blocked isocyanatosilane compound;
(5") a polymer ultraviolet absorber;
(6") inorganic ultraviolet-absorbing particles and/or colloidal silica;
(7") a curing catalyst; and
(8") a solvent.

36. The method for producing a coating composition according to claim 35 wherein
a first mixed solution containing at least the components (1") and (4") is prepared, then;
the component (2") is mixed; and
the component (6") is finally mixed.

37. A method for producing a cured film comprising curing the coating composition according to any one of claims 30 to 32 by heating.
